# EUROPÄISCHE PATENTSCHRIFT

(11) **EP 3 352 554 B1**
(45) Veröffentlichungstag und Bekanntmachung des Hinweises auf die Patenterteilung: **03.06.2020**
(21) Anmeldenummer: 16775132.0
(22) Anmeldetag: 22.09.2016
(51) Int. Cl.: A01B 45/02, A01C 23/02

(54) **BODENBEHANDLUNGSVORRICHTUNG**
GROUND TREATMENT APPARATUS
DISPOSITIF DE TRAITEMENT DU SOL

(30) Priorität: 22.09.2015 DE 102015115991
(43) Veröffentlichungstag der Anmeldung: 01.08.2018
(73) Patentinhaber: Novokraft AG, 4452 Itingen (CH)
(72) Erfinder: HARDMAN, Eric, 4125 Riehen (CH); BÜHRER, Benjamin, 6277 Lieli/LU (CH)
(74) Vertreter: Hoeger, Stellrecht & Partner Patentanwälte mbB
(86) Internationale Anmeldenummer: PCT/EP2016/072509
(87) Internationale Veröffentlichungsnummer: WO 2017/050871

(56) Entgegenhaltungen:
- WO-A1-02/074058
- CA-A1- 2 808 763
- DE-A1- 4 028 996

## Beschreibung

Die Erfindung betrifft eine Bodenbehandlungsvorrichtung für Böden mit Rasenbewuchs, insbesondere Böden von Sport- oder Freizeitanlagen, speziell mit Rasenklimatisierungseinrichtung, wobei die Bodenbehandlungsvorrichtung eine Trageinrichtung umfasst, eine Mehrzahl von an dieser direkt oder indirekt gehaltenen Injektionselementen, sowie eine Fluidbereitstellungseinrichtung, die mit den Injektionselementen fluidwirksam verbunden ist.

Eine derartige Bodenbehandlungsvorrichtung kommt zur Pflege des Bodens zum Einsatz. Über die Injektionselemente wird ein Fluid in den Boden injiziert. Durch die Wirkung des Fluids, insbesondere ein Druckgas oder Druckgasgemisch, kann der Boden gelockert werden. Dies ist von Vorteil bei Böden mit Rasenbewuchs, denn durch verbessert eindringende(s) Luft und Wasser sowie eine bessere Ausbreitungsmöglichkeit für das Wurzelwerk kann der Rasenbewuchs gefördert werden. Zugleich wird die Drainagewirkung im Boden verbessert.

Die vorliegende Erfindung wird nachfolgend am Beispiel einer mit Rasenbewuchs versehenen Sport- oder Freizeitanlage beschrieben, die insbesondere eine Rasenklimatisierungseinrichtung aufweist. Jedoch ist die vorliegende Erfindung nicht auf dieses Anwendungsgebiet beschränkt, auch wenn sie sich hierfür in besonderem Maße eignet. Ein Rasenbewuchs aufweisender Boden einer Sport- oder Freizeitanlage ist zum Beispiel ein Fußballfeld, welches das Spielfeld und dessen Randbereich umfassen kann. Andere Beispiele sind ein Baseballfeld, ein Footballfeld, ein Golfplatz, der sowohl das Green als auch das Fairway umfassen kann, ein Tennisplatz mit Rasenbewuchs, oder eine Rennbahn oder ein Springplatz für den Pferdesport. Beispiele für Freizeitanlagen sind Grünanlagen im öffentlichen Bereich, etwa Parkanlagen.

Böden von Sport- oder Freizeitanlagen mit Rasenklimatisierungseinrichtung können eine im Boden verlegte Verrohrung umfassen, die bei einer vorteilhaften Ausgestaltung relativ oberflächennah verlegt ist. Die oberflächennahe Verlegung erlaubt eine hohe Energieeffizienz der Rasenklimatisierungseinrichtung, bei der es sich um eine Rasenheizeinrichtung und/oder um eine Rasenkühleinrichtung handeln kann. Bei Einsatz einer oberflächennah verlegten Rasenklimatisierungseinrichtung besteht aufgrund der Temperaturschwankungen (man denke an die Erwärmung des Bodens und des Wurzelwerks bei einer Rasenheizung) ein besonderer Bedarf an einer den Rasenbewuchs fördernden Bodenpflege.

Die Patentanmeldungen DE 10 2014 105 577 A1 und DE 10 2015 110 547 (nicht vorveröffentlicht) derselben Anmelderin beschreiben Vorrichtungen zum oberflächennahen Verlegen von Rohren für Rasenklimatisierungseinrichtungen der beschriebenen Art.

Die vorliegende Erfindung kann bei Böden mit natürlichem Rasenbewuchs eingesetzt werden, mit Rollrasen und/oder bei Böden mit einem sogenannten "Hybridrasen", der ein Gemisch aus Kunstrasen und Naturrasen umfasst.

Es sind bereits Bodenbehandlungsvorrichtungen der eingangs genannten Art bekannt. Zur Pflege von Golfanlagen kann zum Beispiel ein unter dem Namen "Air2G2" angebotenes Gerät zum Einsatz kommen (www.air2g2.com). Diese Bodenbehandlungsvorrichtung umfasst eine Trageinrichtung mit drei daran gehaltenen Injektionselementen. Die Vorrichtung wird manuell über den Boden geführt, und zur Fluidinjektion wird die Vorrichtung angehalten und die Injektionselemente in den Boden abgesenkt. Die Vorrichtung mag sich zur Aerifizierung kleiner Bodenbereiche eignen, sie ist beispielsweise bei Golfgreens im Einsatz. Allerdings ist die Vorrichtung aufgrund ihrer Beschaffenheit nur sehr eingeschränkt zum Einsatz auf größeren Bodenflächen, wie zum Beispiel einem Fußballfeld, geeignet. Die Vorrichtung ist manuell zu führen und bei einer jeweiligen Injektion zu stoppen. Die Aerifizierung größerer Bodenflächen ist zeitraubend und verläuft ungleichmäßig.

In der WO 02/074058 A1 ist ein Fahrgestell zum Tragen einer Bodennadel beschrieben, die mittels Luftdruck in den Boden eingeführt wird, wobei Druckluft in den Boden entlassen wird. Am Fahrgestell sind Mittel zum horizontalen und vertikalen Verschieben der Bodennadel vorgesehen. Die WO 02/074058 A1 bezieht sich auch auf ein Verfahren zum Steuern der Bodennadel und des Fahrgestells.

Aufgabe der vorliegenden Erfindung ist es, eine gattungsgemäße Bodenbehandlungsvorrichtung bereitzustellen, mit der auch größere Bodenflächen systematisch und zeitsparend gepflegt werden können.

Diese Aufgabe wird durch eine erfindungsgemäße Bodenbehandlungsvorrichtung mit den Merkmalen von Anspruch 1 gelöst.

Für die nachfolgenden Erläuterungen wird beispielsweise angenommen, dass die Bodenbehandlungsvorrichtung im bestimmungsgemäßen Gebrauch in einer Betriebsstellung auf der Oberfläche des Bodens positioniert ist und längs einer Bearbeitungsrichtung, die von der Bodenbehandlungsvorrichtung definiert ist, über die Bodenfläche bewegt wird. Im bestimmungsgemäßen Gebrauch kann die Bodenbehandlungsvorrichtung insbesondere eine Berührebene definieren, die mit der Oberfläche des Bodens zusammenfällt.

Positions- und Orientierungsangaben wie beispielsweise "horizontal", "vertikal" oder dergleichen sind vorliegend als auf den bestimmungsgemäßen Gebrauch der Bodenbehandlungsvorrichtung bezogen aufzufassen. Dabei wird mit der Bodenbehandlungsvorrichtung insbesondere ein Boden bearbeitet, der eine als horizontal angesehene Oberfläche aufweist.

Bei der erfindungsgemäßen Bodenbehandlungsvorrichtung ist die Mehrzahl der Injektionselemente beweglich relativ zur Trageinrichtung ausgestaltet. Über mindestens eine Antriebseinrichtung können die Injektionselemente angehoben und abgesenkt werden und dadurch dem Boden genähert oder von diesem entfernt werden. Außerdem sind die Injektionselemente längs der Bearbeitungsrichtung relativ zur Trageinrichtung beweglich. "Längs" umfasst vorliegend "in der Bearbeitungsrichtung" und schließt vorzugsweise auch "entgegen der Bearbeitungsrichtung" mit ein. Beim Bewegen der Bodenbehandlungsvorrichtung über den Boden können die Injektionselemente abgesenkt werden und in den Boden eindringen. Während sich die Bodenbehandlungsvorrichtung in der Bearbeitungsrichtung bewegt, können die Injektionselemente ortsfest am Behandlungsbereich verbleiben, die Injektionselemente bewegen sich dadurch relativ zur Trageinrichtung. Der Boden kann über die eingeführten Injektionselemente zur Lockerung mit Fluid beaufschlagt werden. Anschließend können die Injektionselemente angehoben werden. Daraufhin können die Injektionselemente über die mindestens eine Antriebseinrichtung so relativ zur Trageinrichtung bewegt werden, dass sie oberhalb eines weiteren Behandlungsbereiches positioniert sind, der dem ersten Behandlungsbereich in der Bearbeitungsrichtung nachgelagert ist. Die Injektionselemente können sich dabei zumindest zeitweise mit einer Geschwindigkeit in der Bearbeitungsrichtung relativ zur Trageinrichtung bewegen, die die Geschwindigkeit der Trageinrichtung in der Bearbeitungsrichtung übersteigt. Bei erneutem Absenken können die Injektionselemente an dem weiteren Behandlungsbereich in den Boden eindringen, ortsfest zu diesem verbleiben, Fluid injizieren etc. Die bestimmungsgemäße Bodenbehandlungsvorrichtung ermöglicht daher insbesondere eine vorteilhafte "quasi-kontinuierliche" Behandlung des Bodens. Bevorzugt kann die Trageinrichtung mit einer konstanten oder im Wesentlichen konstanten Geschwindigkeit über die Bodenfläche bewegt werden. Über die mindestens eine Antriebseinrichtung werden die Injektionselemente wie vorstehend beschrieben bewegt, und eine sukzessive Injektion von Fluid an den aufeinanderfolgenden Behandlungsbereichen kann erfolgen, ohne dass die Bodenbehandlungsvorrichtung hierzu angehalten werden muss. Aus diesem Grund eignet sich die Bodenbehandlungsvorrichtung besonders zur Pflege großer Bodenflächen, insbesondere von Fußballfeldern.

Vorteilhaft ist es, dass die erfindungsgemäße Bodenbehandlungsvorrichtung eine Halteeinrichtung mit einem Halteteil umfasst, an dem die Injektionselemente gehalten sind, wobei die Halteeinrichtung über die mindestens eine Antriebseinrichtung mit der Trageinrichtung koppelt. Dies erlaubt eine konstruktiv einfache Ausgestaltung und zuverlässige Funktion der Bodenbehandlungsvorrichtung. Die Mehrzahl der Injektionselemente sind an einem Halteteil gemeinsam gehalten. Die Halteeinrichtung mit dem Halteteil koppelt über die mindestens eine Antriebseinrichtung mit der Trageinrichtung. Dies gibt die Möglichkeit, alle Injektionselemente gemeinsam anzuheben und abzusenken sowie längs der Bearbeitungsrichtung zu bewegen. Gesonderte Antriebseinrichtungen für einzelne Injektionselemente können eingespart werden. Über die konstruktive Ausgestaltung hinaus kann eine Ansteuerung der mindestens einen Antriebseinrichtung erheblich vereinfacht werden.

Die Bodenbehandlungsvorrichtung ist vorzugsweise so ausgebildet, dass in Bearbeitungsrichtung aufeinanderfolgende Behandlungsbereiche aneinandergrenzen oder einander überlappen. Auf diese Weise kann der Boden flächendeckend gepflegt werden. Beispielsweise ist zu diesem Zweck die Möglichkeit gegeben, einen Verstellweg der Injektionselemente relativ zur Trageinrichtung längs der Bearbeitungsrichtung einzustellen, zum Beispiel abhängig von der Geschwindigkeit der Bodenbehandlungsvorrichtung.

Günstig ist es, wenn die mindestens eine Antriebseinrichtung elektrisch ansteuerbar ist und wenn die Bodenbehandlungsvorrichtung eine Steuereinrichtung umfasst zum Ansteuern der mindestens einen Antriebseinrichtung. Über die Steuereinrichtung kann auf diese Weise besonders präzise gesteuert werden, wann und/oder mit welchem Verstellweg die Injektionselemente angehoben und abgesenkt und/oder längs der Bearbeitungsrichtung bewegt werden. Eine Eingangsgröße der Steuereinrichtung kann insbesondere die Geschwindigkeit sein, mit der die Bodenbehandlungsvorrichtung über die Bodenfläche bewegt wird.

Die Injektionselemente sind mit der mindestens einen Antriebseinrichtung vorzugsweise geradlinig absenkbar und anhebbar und/oder geradlinig relativ zur Trageinrichtung längs der Bearbeitungsrichtung bewegbar. Zur linearen Bewegung der Injektionselemente kann die mindestens eine Antriebseinrichtung besonders einfach ausgestaltet werden. Dies vereinfacht auch die Ansteuerung der Antriebseinrichtung, zum Beispiel mit der vorstehend genannten Steuereinrichtung.

Bei einer bevorzugten Ausführungsform der Bodenbehandlungsvorrichtung sind die Injektionselemente günstigerweise vertikal oder im Wesentlichen vertikal absenkbar und anhebbar. Alternativ oder ergänzend können die Injektionselemente horizontal oder im Wesentlichen horizontal längs der Bearbeitungsrichtung relativ zur Trageinrichtung bewegbar sein. Die Injektionselemente werden beispielsweise senkrecht und/oder parallel zur von der Bodenbehandlungsvorrichtung definierten Berührebene mittels der mindestens einen Antriebseinrichtung bewegt.

Günstig ist ein vertikales oder im Wesentlichen vertikales Anheben der Injektionselemente beispielsweise, damit klar definierte, vertikale Einstiche im Boden ermöglicht werden. Schräge Einstiche in den Boden, die eine übermäßige Beeinträchtigung der Grasnarbe hervorrufen können, lassen sich dadurch vermeiden.

Günstig ist es, wenn die Injektionselemente längs der Bearbeitungsrichtung und/oder zum Anheben und Absenken relativ zur Trageinrichtung verschieblich sind. Dadurch lassen sich die Injektionselemente wie vorstehend erwähnt geradlinig, insbesondere linear, längs der Bearbeitungsrichtung bewegen und/oder anheben bzw. absenken.

Die mindestens eine Antriebseinrichtung kann auf unterschiedliche Weise ausgestaltet sein. Die Antriebseinrichtung ist zum Beispiel als mechanische oder rein mechanische, als elektrische, hydraulische, pneumatische und/oder magnetische Antriebseinrichtung ausgestaltet. Auch eine Kombination der genannten Funktionsweisen ist möglich.

Eine pneumatische Antriebseinrichtung kann von der Fluidbereitstellungseinrichtung mit Druckgas oder einem Druckgasgemisch beaufschlagbar sein.

Eine besonders vorteilhafte Ausgestaltung der Bodenbehandlungsvorrichtung umfasst zum Anheben und Absenken der Injektionselemente eine erste Antriebseinrichtung sowie eine zweite Antriebseinrichtung zum Bewegen der Injektionselemente längs der Bearbeitungsrichtung. Die erste Antriebseinrichtung ist vorteilhafterweise als hydraulische oder pneumatische Antriebseinrichtung ausgestaltet und erlaubt das Anheben und Absenken der Injektionselemente. Die zweite Antriebseinrichtung ist günstigerweise eine hydraulische oder pneumatische Antriebseinrichtung und ermöglicht das Verschieben der Injektionselemente relativ zur Trageinrichtung zumindest in der Bearbeitungsrichtung. Durch Verwendung von zwei Antriebseinrichtungen, die günstigerweise von der Steuereinrichtung ansteuerbar sind, bevorzugt getrennt voneinander, wird die Steuerung der Bewegung der Injektionselemente vereinfacht.

Es kann vorgesehen sein, dass eine die Injektionselemente längs der Bearbeitungseinrichtung bewegende Antriebseinrichtung deaktiviert ist, während die Injektionselemente in den Boden eingreifen. Beim Eingreifen in den Boden, um diesen mit Fluid zu beaufschlagen, verbleiben die Injektionselemente ortsfest am Behandlungsbereich. Die Trageinrichtung wird in der Behandlungsrichtung weiterbewegt. Die Injektionselemente können technisch einfach relativ zur Trageinrichtung entgegen der Bearbeitungsrichtung bewegt werden, wenn die Antriebseinrichtung deaktiviert oder die Injektionselemente von der Antriebseinrichtung entkoppelt sind. Eine pneumatische Antriebseinrichtung könnte zu diesem Zweck beispielsweise drucklos geschaltet werden.

Bei einer weiteren vorteilhaften Ausführungsform der Bodenbehandlungsvorrichtung kann vorgesehen sein, dass diese eine gemeinsame Antriebseinrichtung umfasst zum Bewegen der Injektionselemente längs der Bearbeitungsrichtung und zum Anheben bzw. Absenken. Beispielsweise kann dies dadurch umgesetzt werden, dass die Injektionselemente direkt oder indirekt an einem Zugelement gehalten sind, das in sich geschlossen ist und umläuft. Das Zugelement ist zum Beispiel eine Kette oder ein Seilzug, die/der über Zahnräder, Walzen oder Rollen umläuft. Bei der umlaufenden Bewegung können die Injektionselemente zum einen längs der Bearbeitungsrichtung bewegt und zum anderen abgesenkt und angehoben werden.

Von Vorteil ist es, wenn die Injektionselemente unabhängig von der Relativposition zur Trageinrichtung in Richtung auf den Boden ausgerichtet sind. Dadurch wird die Positionierung der Injektionselemente zum Boden erheblich vereinfacht. Vorteilhafterweise ist es lediglich erforderlich, die Injektionselemente zum geeigneten Zeitpunkt abzusenken bzw. anzuheben und längs der Bearbeitungsrichtung relativ zur Trageinrichtung zu verschieben.

Es kann bei einer nicht beanspruchten Ausführungsform vorgesehen sein, dass einem jeweiligen Injektionselement eine individuelle Antriebseinrichtung zugeordnet ist zum Bewegen des Injektionselementes relativ zur Trageinrichtung. Die Injektionselemente können individuell mittels der mindestens einen Antriebseinrichtung bewegbar sein. Die Bewegungen von mehreren Injektionselementen über ihnen jeweils zugeordnete Antriebseinrichtungen können über eine Steuereinrichtung synchronisiert oder gekoppelt werden.

Bei Vorhandensein von mehr als einer Antriebseinrichtung greifen diese insbesondere aneinander an. Beispielsweise ist eine Antriebseinrichtung zum Anheben und Absenken der Injektionselemente, an der die Halteeinrichtung angreift, über die Antriebseinrichtung zum Verschieben der Injektionselemente längs der Bearbeitungsrichtung an der Trageinrichtung gehalten. Umgekehrt kann vorgesehen sein, dass eine Antriebseinrichtung zum Verschieben der Injektionselemente, an welcher die Halteeinrichtung angreift, über eine Antriebseinrichtung zum Anheben und Absenken der Injektionselemente mit der Trageinrichtung verbunden ist.

Von Vorteil ist es, wenn die Halteeinrichtung mittels der mindestens einen Antriebseinrichtung zumindest während der Fluidbeaufschlagung mit einer Stützkraft auf den Boden beaufschlagbar ist. Die Halteeinrichtung kann beispielsweise mit den nachfolgend noch erwähnten daran angeordneten Dichtelementen gegen den Boden gedrückt werden. Eine Hebung der Bodenoberfläche infolge der Fluidinjektion kann dadurch vermieden werden. Die Ebenheit der Bodenoberfläche kann beibehalten werden, und die Qualität der Oberfläche wird nicht beeinträchtigt.

Im Halteteil sind vorteilhafterweise Durchgangsöffnungen gebildet, durch die die Injektionselemente hindurchgreifen und an deren Rändern die Injektionselemente unbeweglich fixiert oder beweglich geführt sind. Eine Bewegung der Injektionselemente relativ zum Halteteil kommt zum Beispiel dann in Frage, wenn die Injektionselemente beim Einführen in den Boden auf ein Hindernis stoßen. Durch die Bewegung kann eine Beschädigung des Injektionselementes vermieden werden. Zum Fixieren der Injektionselemente können Fixierelemente vorgesehen sein, die an den Rändern der Durchgangsöffnungen gehalten sind und durch die die Injektionselemente hindurchgreifen.

Das Halteteil ist zumindest bereichsweise plattenförmig ausgestaltet und insbesondere als Halteplatte ausgebildet.

Die Halteeinrichtung kann mindestens ein beispielsweise ebenfalls plattenförmig ausgestaltetes Fixierteil umfassen, das die Halteplatte hält und seinerseits an der Antriebseinrichtung gehalten ist.

Die Injektionselemente sind günstigerweise relativ zum Halteteil verschieblich ausgebildet, insbesondere unabhängig voneinander. Dadurch können Beschädigungen der Injektionselemente, wie vorstehend erwähnt, vermieden werden, wenn die Injektionselemente beim Einführen in den Boden auf ein Hindernis stoßen.

Eine Verschiebung eines jeweiligen Injektionselements relativ zum Halteteil erfolgt günstigerweise entgegen der Wirkung eines jeweiligen Rückstellelementes, welches das Injektionselement in Richtung auf den Boden vorspannt, wobei die Halteeinrichtung ein Stützteil umfasst, an dem sich das Injektionselement in Richtung auf den Boden abstützt. In einer Grundstellung wird ein jeweiliges Injektionselement mittels des Rückstellelementes in Richtung auf den Boden vorgespannt. Bei Anstoßen an einem Hindernis kann das Injektionselement entgegen der Wirkung des Rückstellelementes verschoben und dadurch vor einer Beschädigung geschützt werden. Entfällt das Hindernis, zum Beispiel wenn die Injektionselemente vom Boden angehoben werden, kann das Injektionselement wieder mit dem Rückstellelement in die Grundstellung verschoben werden. Das Rückstellelement ist zum Beispiel als Feder ausgestaltet, die sich zum einen direkt oder indirekt an Injektionselement und zum anderen direkt oder indirekt am Halteteil abstützt.

Bei einer vorteilhaften Ausführungsform kann vorgesehen sein, dass an der Halteeinrichtung, insbesondere am Halteteil, eine Fluidleitung gehalten ist, über die die Injektionselemente mit der Fluidbereitstellungseinrichtung strömungsverbunden sind. Die Fluidleitung umfasst zum Beispiel mindestens ein Rohr, an das die Injektionselemente parallel angeschlossen sind. Einem jeweiligen Injektionselement kann ein Ventil vorgeschaltet sein, um eine zuverlässigere Funktion der Bodenbehandlungsvorrichtung sicherzustellen.

Die Bodenbehandlungsvorrichtung umfasst vorteilhafterweise mindestens ein Dichtelement, das sich an der Halteeinrichtung abstützt und in deren abgesenkten Zustand auf dem Boden aufliegt, wobei das Dichtelement oder ein Rand des Dichtelementes mindestens ein Injektionselement einfasst. Beispielsweise fasst das Dichtelement oder ein Rand des Dichtelements mehrere Injektionselemente ein, insbesondere alle Injektionselemente. Über das Dichtelement kann zum einen die Stützkraft der Halteeinrichtung auf den Boden ausgeübt werden. Zum anderen kann sichergestellt werden, dass das injizierte Fluid nicht durch die Bodenoberfläche entweicht, sondern im Boden verbleibt.

Vorteilhafterweise ist einem jeweiligen Injektionselement ein Dichtelement zum Aufliegen auf dem Boden zugeordnet, wobei das Injektionselement das Dichtelement durchgreift und vorzugsweise konzentrisch zum Dichtelement ausgerichtet ist. Das Dichtelement ist zum Beispiel teller- oder scheibenförmig ausgestaltet und wird zentral vom Injektionselement durchgriffen.

Das oder die Dichtelement(e) ist bzw. sind vorteilhafterweise über ein Montageteil am Halteteil, am Stützteil oder am Fixierteil abgestützt.

Es kann vorgesehen sein, dass ein jeweiliges Dichtelement an einem ihm zugeordneten Injektionselement festgelegt ist.

Als vorteilhaft erweist es sich, wenn die Injektionselemente nach Einführen in den Boden und vor Ausüben der Fluidinjektion mittels der mindestens einen Antriebseinrichtung anhebbar sind, um einen Freiraum unterhalb der Injektionselemente im Boden bereitzustellen. Die Injektionselemente können während des Eingreifens in den Boden, bezogen auf die Bearbeitungsrichtung der Bodenbehandlungsvorrichtung, ortsfest am Behandlungsbereich verbleiben, wobei die Trageinrichtung weiter in der Bearbeitungsrichtung bewegt wird. "Ortsfest" schließt nicht aus, dass die Injektionselemente mit der mindestens einen Antriebseinrichtung nach dem Einführen in den Boden und vor Ausüben der Fluidinjektion angehoben werden können. Beispielsweise werden die Injektionselemente geringfügig um ungefähr 0,3 cm bis 0,8 cm angehoben. Es zeigt sich in der Praxis, dass aufgrund des entstehenden Freiraumes eine bessere Lockerungswirkung des Bodens erzielt werden kann.

Optional kann bei einer Bodenbehandlungsvorrichtung der eingangs genannten Art, deren Injektionselemente beispielsweise auf eine der vorliegend beschriebenen Weisen absenkbar und anhebbar sind, vorgesehen sein, dass die Injektionselemente nach Einführen in den Boden und vor Ausüben der Fluidinjektion mittels der mindestens einen Antriebseinrichtung anhebbar sind, um einen Freiraum unterhalb der Injektionselemente im Boden bereitzustellen. Diese Merkmale können mit den Merkmalen einer Bodenbehandlungsvorrichtung der eingangs genannten Art eine eigenständige Erfindung begründen. Optional können dabei zusätzliche Merkmale vorgesehen sein, die die vorliegende Offenbarung umfasst.

Günstigerweise ist eine Fluidinjektion durchführbar, die zumindest einen der folgenden Parameter umfasst:
- einzelner Druckstoß oder mehrere aufeinanderfolgende Druckstöße;
- Fluiddruck von ungefähr 5 bar bis 10 bar;
- Dauer eines jeweiligen Druckstoßes ungefähr 0,1 s bis 0,5 s;
- Eingreiftiefe der Injektionselemente in den Boden circa 5 cm bis 15 cm.

In der Praxis erweist sich beispielsweise eine Fluidinjektion mit folgenden Parametern als vorteilhaft: einzelner Druckstoß mit ungefähr 7 bar für eine Dauer von ungefähr 0,3 s, in einer Tiefe von ungefähr 5 cm bis 10 cm.

Die Injektionselemente sind günstigerweise lanzenförmig ausgestaltet oder umfassen Lanzen.

Die Injektionselemente sind vorteilhafterweise endseitig oder an einem Endabschnitt mit einer jeweiligen Düse versehen.

Bei einer Bodenbehandlungsvorrichtung der eingangs genannten Art kann optional günstigerweise vorgesehen sein, dass die Injektionselemente endseitig oder an einem Endabschnitt mit einer jeweiligen Düse versehen sind. Diese Merkmale können mit den Merkmalen einer Bodenbehandlungsvorrichtung der eingangs genannten Art eine eigenständige Erfindung begründen. Optional können dabei zusätzliche Merkmale vorgesehen sein, die die vorliegende Offenbarung umfasst.

Von Vorteil ist es, wenn die Düse mindestens einen Austrittskanal für Fluid umfasst, der im Winkel zu einem axialen Zuführkanal des Injektionselementes ausgerichtet ist. "Axial" bezieht sich beispielsweise auf eine Lanzenform des Injektionselementes. Der axiale Zuführkanal verläuft zum Beispiel zentral, und der Austrittskanal ist im Winkel zum Zuführkanal ausgerichtet. Fluid tritt dadurch nicht axial aus dem Injektionselement aus, sondern seitlich im Winkel zur Achse.

Günstig ist es, wenn zwei oder mehr symmetrisch zueinander an der Düse angeordnete Austrittskanäle vorgesehen sind, insbesondere drei Austrittskanäle. Durch die zwei oder mehr Austrittskanäle kann der Boden um eine jeweilige Düse herum mit Fluid beaufschlagt werden, es bildet sich gewissermaßen eine "Fluidwolke", mit der eine besonders gute Bodenlockerung erzielt werden kann.

Der Winkel zwischen dem mindestens einen Austrittskanal und dem axialen Zuführkanal kann zum Beispiel ungefähr 10° bis 50° betragen, vorteilhafterweise ungefähr 40°. Bei einer andersartigen Ausgestaltung einer Düse kann ein Winkel von 90° oder ungefähr 90° zwischen dem mindestens einen Austrittskanal und dem axialen Zuführkanal vorgesehen sein. Eine derartige Düse kommt beispielsweise bei Hybridrasen zum Einsatz.

Die Düse kann endseitig spitz oder abgerundet ausgestaltet sein. In der Praxis erweist sich eine spitze Düse als günstiger für den Einsatz bei Hybridrasen, um die kunstrasenfasernaufnehmende Textilstruktur des Hybridrasens zu durchstechen. Eine abgerundete Düse erweist sich als günstiger für den Einsatz mit Naturrasen oder Rollrasen.

Die Düse kann sich in Richtung der Endseite verjüngend ausgestaltet sein, beispielsweise konisch verjüngend. Der mindestens eine Austrittskanal für Fluid kann im Bereich der Verjüngung angeordnet sein.

Es war bereits auf die "Fluidwolke" eingegangen worden. Die Fluidwolke kann als Wirksamkeitsbereich einer jeweiligen Fluidinjektion eines Injektionselementes angesehen werden.

Von Vorteil ist es, wenn die Injektionselemente derart relativ zueinander positioniert sind, wenn am Behandlungsbereich jeweils auftretende Wirksamkeitsbereiche der Fluidinjektionen der einzelnen Düsen einander überlappen oder aneinander grenzen. Dadurch lässt sich sicherstellen, dass der Behandlungsbereich möglichst über das gesamte Volumen mit Fluid beaufschlagt und gelockert wird.

Die Injektionselemente sind vorteilhafterweise identisch ausgestaltet.

Die Bodenbehandlungsvorrichtung kann zum Beispiel zehn oder mehr Injektionselemente aufweisen, wobei günstigerweise 20 oder mehr Injektionselemente vorhanden sind. Eine konkrete Umsetzung, die nachfolgend beschrieben wird, umfasst zum Beispiel 26 Injektionselemente. Bei dieser Bodenbehandlungsvorrichtung sind beispielsweise vier Reihen mit 6, 7, 6, 7 Stück Injektionselementen vorhanden.

Bei andersartigen vorteilhaften Ausführungsformen können beispielsweise 13 Injektionselemente bei einer kompakteren Bodenbehandlungsvorrichtung vorhanden sein (z.B. in zwei Reihen mit 6, 7 Stück) oder 39 Injektionselemente bei einer größeren Bodenbehandlungsvorrichtung (z.B. in sechs Reihen mit 6, 7, 6, 7, 6, 7 Stück).

Die Anzahl der Injektionselemente ist vorteilhafterweise abhängig von einem jeweiligen Einsatz wählbar. Dementsprechend kann vorgesehen sein, dass Injektionselemente der Bodenbehandlungsvorrichtung hinzufügbar oder von dieser entfernbar sind.

Die Injektionselemente können ganz oder teilweise austauschbar sein, um sie bei Verschleiß zu ersetzen oder je nach Einsatz an die Beschaffenheit des Bodens anzupassen. Beispielsweise ist besonders die Düse austauschbar.

Ein Austauschen, Hinzufügen oder Entfernen von Injektionselementen ist vorteilhafterweise manuell und/oder werkzeuglos möglich.

In der Praxis erweist es sich als günstig, wenn die Injektionselemente voneinander ungefähr 15 cm bis 30 cm beabstandet sind.

Günstigerweise sind die Injektionselemente gleichmäßig voneinander beabstandet.

Besonders vorteilhaft ist es, wenn die Injektionselemente in einem regelmäßigen Muster zueinander angeordnet sind, insbesondere einem hexagonalen oder rechteckigen Muster.

Die Injektionselemente können längs einer oder mehrerer Reihen angeordnet sein. Die Injektionselemente benachbarter Reihen können auf Lücke zueinander positioniert sein.

Bei einer konkreten Umsetzung kann vorgesehen sein, dass die Bodenbehandlungsvorrichtung mindestens eine erste Gruppe und mindestens eine zweite Gruppe von Injektionselementen umfasst, die in einer ersten Reihe bzw. einer zweiten Reihe angeordnet sind, wobei die Injektionselemente der ersten Reihe bezüglich den Injektionselementen der zweiten Reihe auf Lücke angeordnet sind. Dadurch lässt sich zum Beispiel eine hexagonale Anordnung der Injektionselemente erzielen, wenn ein jeweiliges Injektionselement der zweiten Reihe auf Lücke mittig zwischen zwei Injektionselementen der ersten Reihe angeordnet ist und von diesen einen Abstand aufweist, der mit dem Abstand der Injektionselemente der ersten Reihe voneinander übereinstimmt.

Als günstig erweist sich in der Praxis eine Eindringtiefe der Injektionselemente in den Boden von circa 5 cm bis 15 cm.

Weist der Boden eine Verrohrung einer Rasenklimatisierungseinrichtung auf, werden die Injektionselemente vorteilhafterweise nur bis zur Verlegetiefe der Verrohrung in den Boden eingeführt. Günstigerweise ist die Eindringtiefe geringer, um ein Anstoßen der Injektionselemente an der Verrohrung und sich etwaige daraus ergebende Beschädigungen zu vermeiden.

Es kann vorgesehen sein, dass die Bodenbehandlungsvorrichtung eine Verstelleinrichtung umfasst, mit der die Eindringtiefe der Injektionselemente in den Boden einstellbar ist. Beispielsweise sind die Injektionselemente relativ zur Halteeinrichtung, beispielsweise dessen Halteteil, verstellbar.

Das Fluid kann ein Druckgas oder ein Druckgasgemisch sein oder umfassen. Als Druckgasgemisch kann insbesondere Druckluft zum Einsatz kommen.

Das Fluid kann alternativ oder ergänzend eine Flüssigkeit sein oder umfassen. Beispielsweise ist oder umfasst die Flüssigkeit eine Nährstofflösung für den Rasenbewuchs.

Günstig ist es, wenn die Fluidbereitstellungseinrichtung einen Kompressor zum Bereitstellen von Fluid umfasst und eine mit diesem strömungsverbundene Speichereinrichtung für das Fluid, das mit den Injektionselementen strömungsverbunden ist. Der Kompressor ist insbesondere ein Druckluftkompressor, mit dem Druckluft in die Speichereinrichtung gefördert werden kann.

Zum Antreiben des Kompressors kann die Bodenbehandlungsvorrichtung eine eigenständige Antriebseinrichtung aufweisen, die in den Kompressor integriert sein kann. Denkbar ist auch, dass der Kompressor von extern antreibbar ist, zum Beispiel über ein Zugfahrzeug für die Bodenbehandlungsvorrichtung.

Die Fluidbereitstellungseinrichtung umfasst günstigerweise eine Fluidleitung, an die die Injektionselemente parallel angeschlossen sind.

Als vorteilhaft erweist es sich in der Praxis, wenn die Trageinrichtung als Tragrahmen ausgestaltet ist oder einen solchen umfasst.

Der Tragrahmen kann insbesondere ein Metallrahmen sein.

Günstig ist es, wenn an der Trageinrichtung mindestens ein insbesondere walzenförmiges Auflageelement angeordnet ist zum Aufliegen auf der Bodenfläche, das den Injektionselementen in Bearbeitungsrichtung vorgelagert oder nachgelagert ist. Beispielsweise ist ein walzenförmiges Auflageelement in der Bearbeitungsrichtung den Injektionselementen vorgelagert und erlaubt es, den Boden, falls erforderlich, einzuebnen. Alternativ oder ergänzend kann den Injektionselementen in der Bearbeitungsrichtung nachgelagert ein weiteres walzenförmiges Auflageelement vorgesehen sein. Etwaige Bodenunebenheiten infolge der Fluidinjektion können mit diesem Auflageelement eingeebnet werden.

Die Bodenbehandlungsvorrichtung umfasst günstigerweise einen Fahrantrieb zum Verfahren auf der Bodenfläche. Bei einer vorteilhaften Ausführungsform kann vorgesehen sein, dass die Bodenbehandlungsvorrichtung selbstfahrend und selbstlenkend ausgestaltet ist, so dass eine autonome Pflege des Bodens durchgeführt werden kann.

Bei einer andersartigen Ausführungsform kann vorgesehen sein, dass die Bodenbehandlungsvorrichtung eine Kupplungseinrichtung umfasst zum Ankuppeln an ein Zug- oder ein Schubfahrzeug. Das Zug- oder Schubfahrzeug kann einen Nebenabtrieb aufweisen, mit dem die mindestens einen Antriebseinrichtung und/oder eine etwaige Antriebseinrichtung für den Kompressor angetrieben werden können.

Die Kupplungseinrichtung kann so ausgebildet sein, dass die Bodenbehandlungsvorrichtung, zumindest teilweise, anhebbar und/oder absenkbar an das Zugfahrzeug angekoppelt werden kann.

Die Bodenbehandlungsvorrichtung kann ein die Trageinrichtung überdeckendes Gehäuse umfassen, so dass die Trageinrichtung und an dieser gehaltene Bauteile geschützt sind.

Die vorliegende Offenbarung betrifft auch ein Verfahren zum Behandeln von Böden mit Rasenbewuchs, insbesondere Böden von Sport- oder Freizeitanlagen, speziell mit Rasenklimatisierungseinrichtung. Bei einem Verfahren, das eine eigenständige Erfindung darstellen kann, kann eine Bodenbehandlungsvorrichtung der vorstehend genannten Art zum Einsatz kommen. Die Vorrichtung kann in einer Bearbeitungsrichtung über den Boden bewegt werden, wobei die Injektionselemente unter Absenken in den Boden eingeführt werden, um Fluid an einem Behandlungsbereich in den Boden zu injizieren, wobei die Injektionselemente während des Eingreifens in den Boden am Behandlungsbereich ortsfest verbleiben, unter Relativbewegung zu der in der Bearbeitungsrichtung bewegten Trageinrichtung, wobei die Injektionselemente nach der Fluidinjektion angehoben werden und in der Bearbeitungsrichtung relativ zur Trageinrichtung bewegt werden, wobei die Injektionselemente bei erneutem Absenken in den Boden an einem weiteren Behandlungsbereich eingeführt werden, der dem erstgenannten Behandlungsbereich in der Bearbeitungseinrichtung nachgelagert ist.

Die Vorteile, die im Zusammenhang mit der Erläuterung der erfindungsgemäßen Bodenbehandlungsvorrichtung erwähnt wurden, können unter Ausübung des Verfahrens erzielt werden. Diesbezüglich kann auf voranstehende Ausführungen verwiesen werden. Vorteilhafte Ausführungsbeispiele des Verfahrens ergeben sich durch vorteilhafte Ausführungsbeispiele der erfindungsgemäßen Bodenbehandlungsvorrichtung.

Die vorliegende Offenbarung bezieht sich ferner auf ein Verfahren zur Behandlung von Böden mit einer Bodenbehandlungsvorrichtung der eingangs genannten Art, deren Injektionselemente beispielsweise auf eine der vorliegend beschriebenen Weisen absenkbar und anhebbar sind. Bei einem derartigen Verfahren kann gemäß einer Erfindung vorgesehen sein, dass die Injektionselemente nach Einführen in den Boden und vor Ausüben der Fluidinjektion mittels der mindestens einen Antriebseinrichtung angehoben werden, um einen Freiraum unterhalb der Injektionselemente im Boden bereitzustellen. Dies kann ein eigenständiges erfindungsgemäßes Verfahren begründen. Optional können zur Definition vorteilhafter Ausführungsbeispiele des Verfahrens zusätzliche Merkmale vorgesehen sein, die die vorliegende Offenbarung umfasst.

Die vorliegende Offenbarung bezieht sich ferner auf ein Verfahren zur Behandlung von Böden mit einer Bodenbehandlungsvorrichtung der eingangs genannten Art, in welchen Böden Leitungen einer Rasenklimatisierungseinrichtung verlegt sind. Bei einem derartigen Verfahren kann gemäß einer Erfindung vorgesehen sein, dass die Injektionselemente nur bis zur oder weniger als die Verlegetiefe der Leitungen (Verrohrung) in den Boden eingeführt werden, und dass die Fluidinjektion derart ausgeführt wird, dass Bereiche zwischen benachbarten Leitungen und unterhalb der Leitungen von dem injizierten Fluid erfasst werden. Dies kann ein eigenständiges erfindungsgemäßes Verfahren begründen, bei dem eine wirkungsvolle Bodenlockerung auch zwischen den Leitungen und unterhalb der Leitungen erzielt werden und zugleich eine Beschädigung der Leitungen vermieden werden kann. Es kann vorgesehen sein, dass die Verlegetiefe der Leitungen von der Vorrichtung automatisch erfasst wird. Optional können zur Definition vorteilhafter Ausführungsbeispiele des Verfahrens zusätzliche Merkmale vorgesehen sein, die die vorliegende Offenbarung umfasst.

Die nachfolgende Beschreibung vorteilhafter Ausführungsformen der Erfindung, mit denen eines der vorstehend genannten Verfahren durchführbar ist, dient im Zusammenhang mit der Zeichnung der näheren Erläuterung der Erfindung. Es zeigen:
- Fig. 1:: eine vorteilhafte Ausführungsform einer erfindungsgemäßen Bodenbehandlungsvorrichtung in perspektivischer Darstellung, umfassend eine Trageinrichtung und ein Gehäuse;
- Fig. 2:: die Bodenbehandlungsvorrichtung aus Fig. 1 nach Entfernen des Gehäuses;
- Fig. 3:: eine vergrößerte Detailansicht der Bodenbehandlungsvorrichtung in Fig. 2;
- Fig. 4:: eine Frontansicht der Bodenbehandlungsvorrichtung mit Blickrichtung gemäß Pfeil "4" in Fig. 3;
- Fig. 5:: eine Teilansicht der Bodenbehandlungsvorrichtung von unten mit Blickrichtung gemäß Pfeil "5" in Fig. 4;
- Fig. 6:: eine Detailansicht einer Halteeinrichtung mit daran gehaltenen Injektionselementen der Bodenbehandlungsvorrichtung in vergrößerter Darstellung, wobei die Injektionselemente in einen zu pflegenden Boden eingreifen;
- Fig. 7:: eine Seitenansicht einer Düse eines Injektionselementes;
- Fig. 8:: eine Draufsicht auf die Düse in Fig. 7 gemäß Pfeil "8" in Fig. 7;
- Fig. 9:: eine Schnittansicht längs der Linie 9-9 in Fig. 7;
- Fig. 10:: eine Darstellung entsprechend Fig. 9 bei einer andersartigen Düse des Injektionselementes;
- Fig. 11:: eine Darstellung entsprechend Fig. 7 bei einer andersartigen Düse des Injektionselementes;
- Fig. 12:: eine weitere Darstellung entsprechend Fig. 7 bei einer andersartigen Düse des Injektionselementes;
- Fig. 13 - 17:: die Funktionsweise der Bodenbehandlungsvorrichtung im bestimmungsgemäßen Gebrauch während der Behandlung eines Bodens, wobei die Bodenbehandlungsvorrichtung über die Bodenfläche verfahren wird und die Injektionselemente relativ zur Trageinrichtung bewegt werden;
- Fig. 18:: eine vergrößerte Darstellung von Fig. 15, welche Fig. 15 schematisch die Injektion von Fluid in den Boden zeigt; und
- Fig. 19:: eine perspektivische Darstellung einer weiteren vorteilhaften Ausführungsform einer erfindungsgemäßen Bodenbehandlungsvorrichtung.

Die Zeichnung zeigt eine vorteilhafte Ausführungsform einer insgesamt mit dem Bezugszeichen 10 belegten erfindungsgemäßen Bodenbehandlungsvorrichtung, nachfolgend vereinfachend als Vorrichtung 10 bezeichnet. Die Vorrichtung 10 kommt insbesondere zur Bodenpflege bei Rasenbewuchs aufweisenden Böden zum Einsatz. Diese Böden sind insbesondere die Böden von Sportanlagen mit einer Rasenklimatisierungseinrichtung, zum Beispiel Fußballfelder.

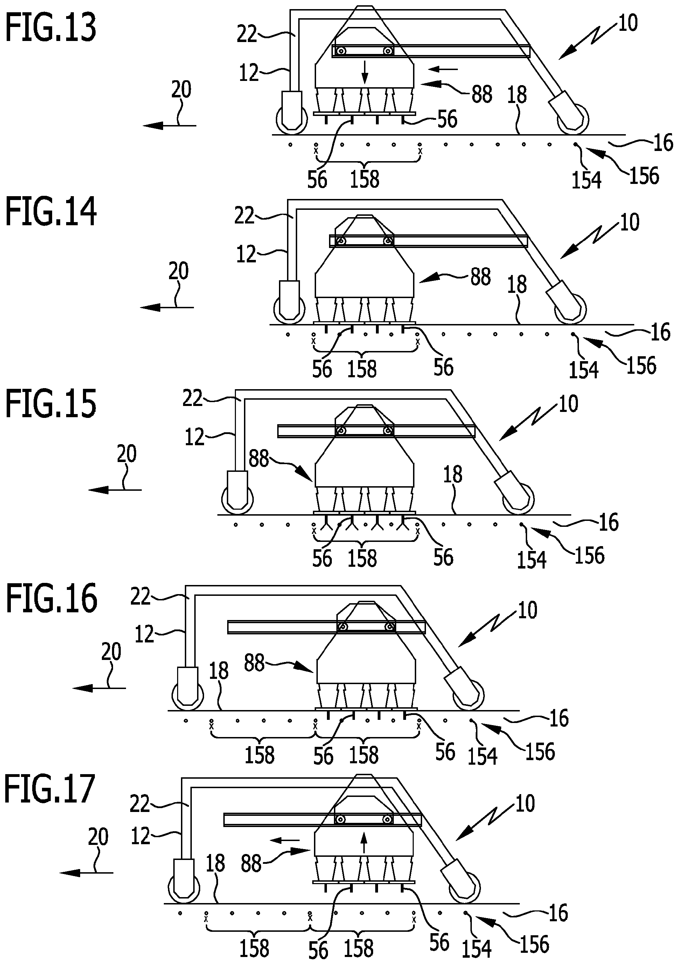

Die Vorrichtung 10 weist eine Vorderseite 12 und eine Rückseite 14 auf. "Vorderseite" und "Rückseite" sind, ebenso wie die weiteren Positions- und Orientierungsangaben, auf einen bestimmungsgemäßen Gebrauch der Vorrichtung 10 bezogen aufzufassen. Die Vorrichtung 10 wird im bestimmungsgemäßen Gebrauch in einer Betriebsstellung zum Bearbeiten des Bodens 16 über dessen Bodenfläche 18 bewegt, und zwar in einer Bearbeitungsrichtung 20. Die Bewegung der Vorrichtung 10 über die Bodenfläche 18 wird nachfolgend insbesondere am Beispiel der Fig. 13 bis 17 beschrieben.

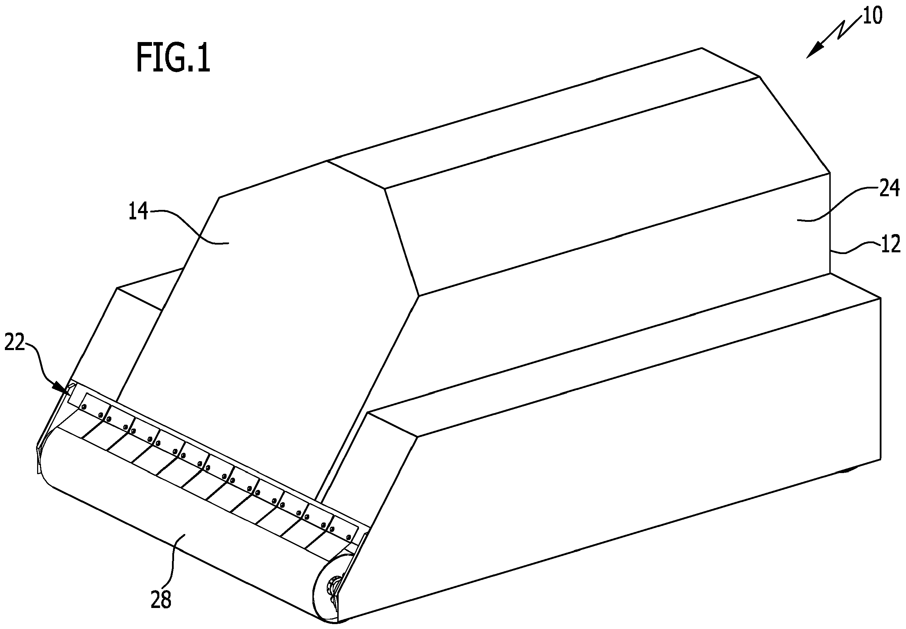

Die Vorrichtung 10 umfasst eine Trageinrichtung 22, die von einem schützenden Gehäuse 24 überdeckt und nur in Fig. 1 gezeigt ist. Die Trageinrichtung 22 umfasst einen Tragrahmen 26, der insbesondere als Metallrahmen ausgestaltet ist und Längs-, Quer- und Schrägträger umfasst.

Weiter umfasst die Trageinrichtung 22 an der Vorderseite 12 und an der Rückseite 14 walzenförmige Auflageelemente 28. Die Auflageelemente 28 sind um quer zur Bearbeitungsrichtung 20 ausgerichtete Drehachsen 30 drehbar. Das Gewicht der Vorrichtung 10 wird über die Auflageelemente 28 gleichmäßig auf die Bodenfläche 18 verteilt. Die Auflageelemente 28 dienen zum Einebnen der Bodenfläche 18 vor und nach der Bearbeitung mit der Vorrichtung 10.

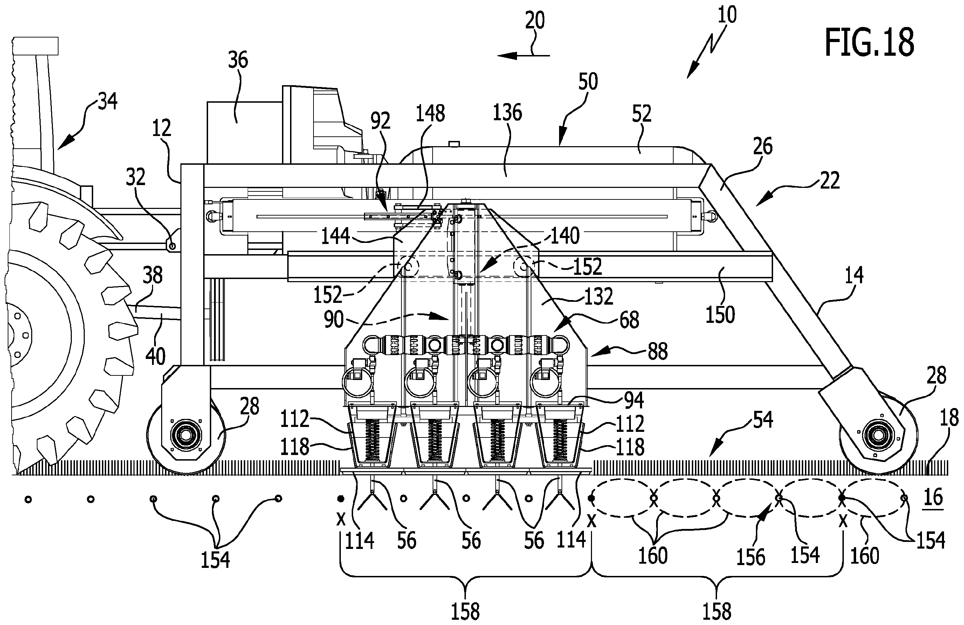

Am Tragrahmen 26 ist ferner eine Kupplungseinrichtung 32 an der Vorderseite 12 angeordnet (Fig. 18). Über die Kupplungseinrichtung 32 kann die Vorrichtung 10 an ein Zugfahrzeug 34, vorliegend einen Traktor, angekoppelt werden. Das Zugfahrzeug 24 zieht die Vorrichtung 10 über die Bodenfläche 18.

Bei einer andersartigen Ausgestaltung kann vorgesehen sein, dass die Vorrichtung 10 selbstfahrend und selbstlenkend ist und autonom über die Bodenfläche 18 verfahren kann.

Der Tragrahmen 26 nimmt ferner eine Fluidbereitstellungseinrichtung 35 der Vorrichtung 10 auf. Diese weist einen Kompressor 36 auf, mit dem ein Druckgasgemisch, vorliegend insbesondere Druckluft, verdichtet werden kann. Der Kompressor 36 ist angrenzend an die Vorderseite 12 gehalten und durch einen Nebenabtrieb des Zugfahrzeuges 34 antreibbar. Zu diesem Zweck kann eine Welle 40 des Nebenabtriebes 38 über ein Getriebe 32 eine in den Kompressor 36 integrierte Antriebseinrichtung antreiben. Das Getriebe 32 ist vorliegend ausgestaltet als Riemengetriebe mit Riemenscheiben 44, 46 an der Welle 40 bzw. am Kompressor 36 sowie einen diese verbindenden Riemen 48.

Der Kompressor 36 fördert Druckluft in eine Speichereinrichtung 50 der Fluidbereitstellungseinrichtung 35, ausgestaltet als Druckluftbehälter 52. Der Behälter 52 ist zentral obenseitig am Tragrahmen 26 gehalten.

Druckluft wird auf nachfolgend erläuterte Weise in den Boden 16 injiziert, um diesen zu lockern und das Wachstum von Rasen am Boden 16 zu fördern. Der Rasenbewuchs 54 des Bodens 16 ist in Fig. 18 schematisch dargestellt und in den übrigen Figuren ausgeblendet.

Zur Injektion von Druckluft in den Boden 16 umfasst die Vorrichtung 10 eine Vielzahl von Injektionselementen 56. Vorliegend sind insbesondere 26 Injektionselemente 56 vorgesehen. Die Injektionselemente 56 sind identisch ausgestaltet, und deren Halterung an der Trageinrichtung 22 ist ebenfalls identisch, so dass nachfolgend nur auf ein Injektionselement 56 eingegangen wird.

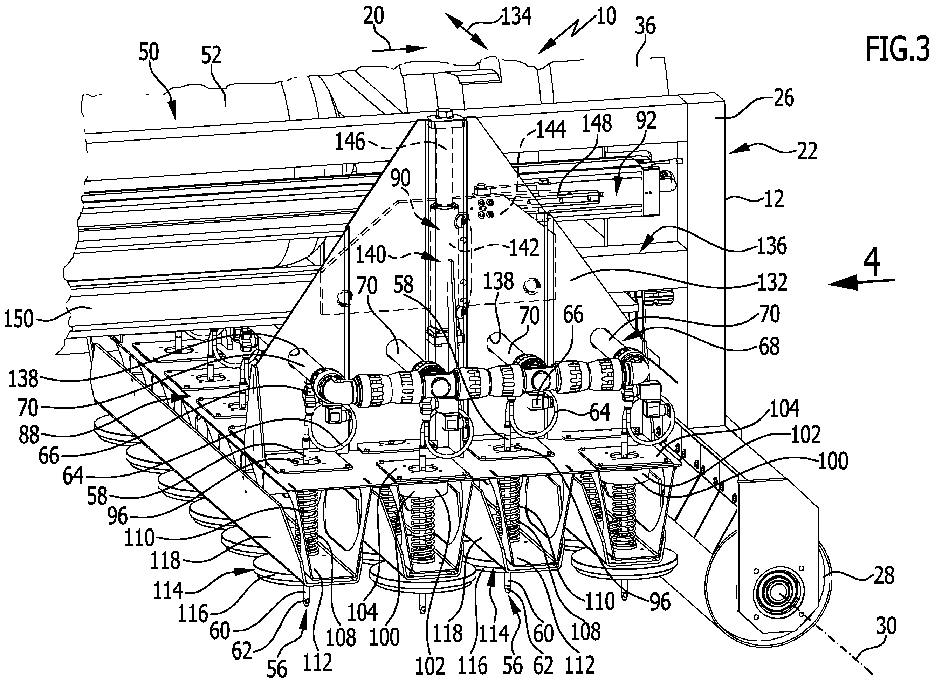

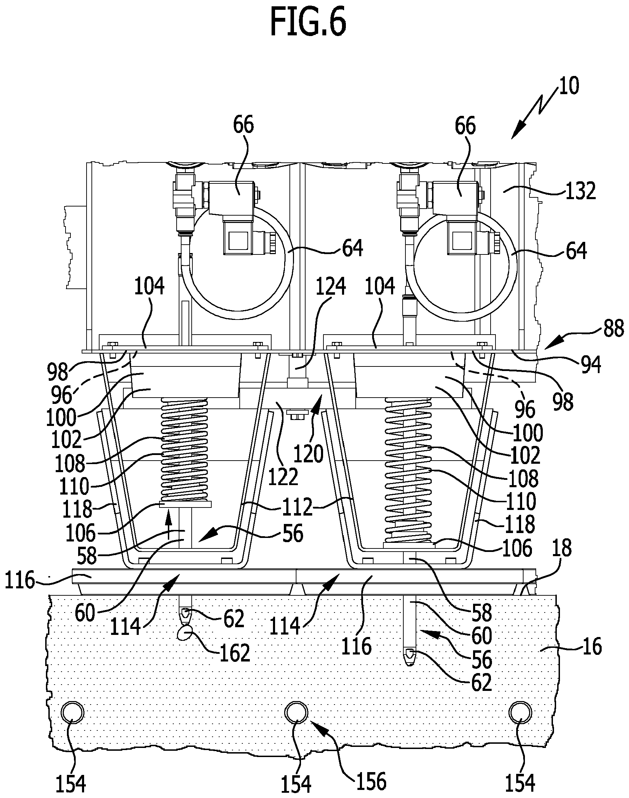

Wie insbesondere aus den Fig. 3 und 6 deutlich wird, umfasst das Injektionselement 56 eine Lanze 58, die ein Rohr 60 aufweist sowie eine endseitig an diesem angeordnete Düse 62. An der der Düse 62 abgewandten Seite des Rohres 60 weist das Injektionselement 56 eine flexible Schlauchleitung 64 auf sowie dieser vorgeschaltet ein Ventil 66. Über die Ventile 66 sind die Injektionselemente 56 an einer Fluidleitung 68 der Fluidbereitstellungseinrichtung 35 parallel angeschlossen.

Die Fluidleitung 64 umfasst im vorliegenden Fall vier parallel zueinander ausgerichtete miteinander strömungsverbundene Rohre 70.

Die Fluidleitung 68 steht in Fluidverbindung mit dem Behälter 52, hierzu ist beispielsweise eine in der Zeichnung nicht dargestellte Rohr- oder Schlauchleitung vorgesehen. Druckluft kann aus dem Behälter 62 in die Fluidleitung 68 und über diese in die Injektionselemente 56 strömen. Die Ventile 66 können selbstöffnende Ventile oder vorzugsweise von einer Steuereinrichtung 72 der Vorrichtung 10 schaltbare Ventile sein.

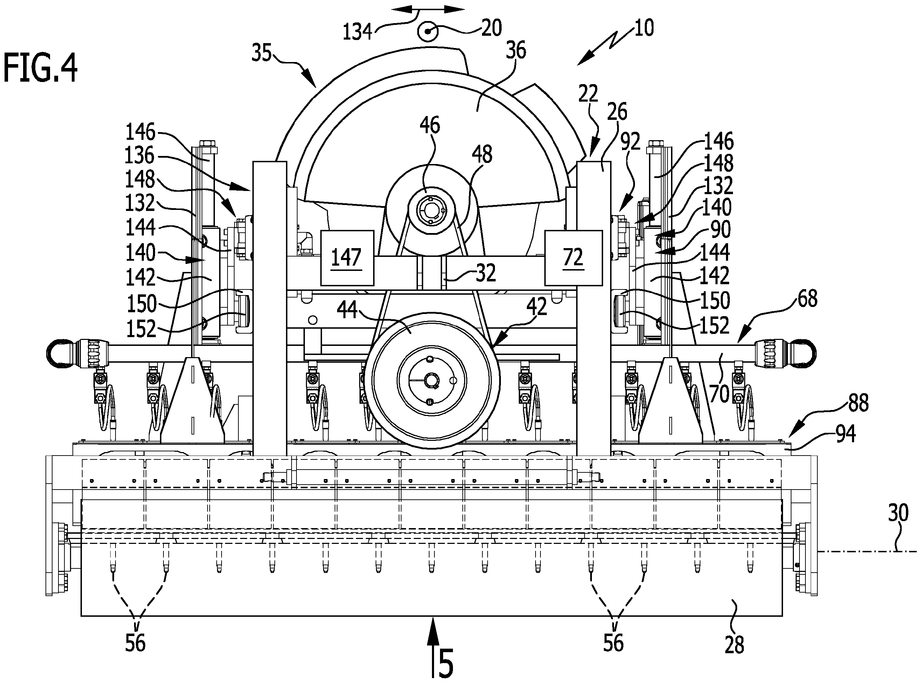

Die Steuereinrichtung 72 ist in Fig. 4 schematisch dargestellt und als elektrische Steuereinrichtung ausgebildet. In der Zeichnung nicht dargestellte Eingangsleitungen und Ausgangsleitungen können vorhanden sein, um der Steuereinrichtung 72 Eingangssignale zuzuführen und um Ausgangssignale abzugeben. Ausgangssignale können beispielsweise den Ventilen 66 zugeführt werden oder den nachfolgend noch erläuterten Antriebseinrichtungen 90, 92 der Vorrichtung 10.

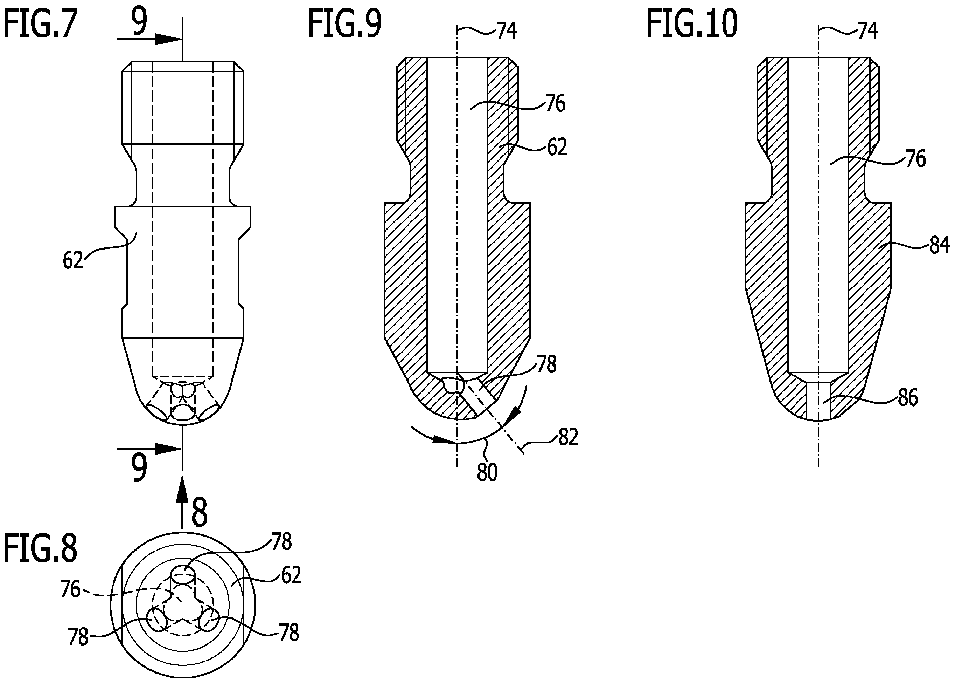

Wie insbesondere aus den Fig. 7 bis 12 hervorgeht, definiert die Lanze 58 eine Achse 74, wobei die Düse 62 und das Rohr 60 koaxial zueinander ausgerichtet sind. Die in den Fig. 7 bis 9 gezeigte Düse 62 umfasst einen axialen Zuführkanal 76 für Fluid, der mit einem entsprechenden Zuführkanal des Rohres 60 strömungsverbunden ist. Weiter umfasst die Düse 62 Austrittskanäle 78 für Fluid an der Endseite der Düse 62. Vorliegend sind drei Austrittskanäle 78 vorgesehen, die symmetrisch zueinander an der Düse 62 angeordnet sind. Ein jeweiliger Winkelabstand der Austrittskanäle 78 voneinander um die Achse 74 beträgt 120°.

Die Austrittskanäle 78 schließen mit dem Zuführkanal 76 jeweils einen Winkel 80 ein. Der Winkel 80 ist definiert durch den kleineren Winkel zwischen der Achse 74 und einer jeweiligen Achse 82 eines Austrittskanals 80 (Fig. 9).

Bei einer vorteilhaften Ausführungsform der Vorrichtung 10 beträgt der Winkel 80 beispielsweise ungefähr 10° bis 50°, insbesondere ungefähr 40°.

Die Fig. 10 zeigt eine andersartige Ausgestaltung einer mit dem Bezugszeichen 84 versehenen Düse. Bei der Düse 84 ist nur ein Austrittskanal 86 vorgesehen, der koaxial zum Zuführkanal 76 ausgerichtet ist und dementsprechend axial verläuft.

Die Düsen 62 und 84 sind endseitig abgerundet ausgestaltet und kommen vorzugsweise zum Einsatz, wenn der zu bearbeitende Boden 16 einen Naturrasen oder Rollrasen aufweist. Beide Düsen 62, 84 können in einer Variante spitz ausgebildet sein und können beispielsweise bei einem Boden 16 eingesetzt werden, der einen Hybridrasen aufweist.

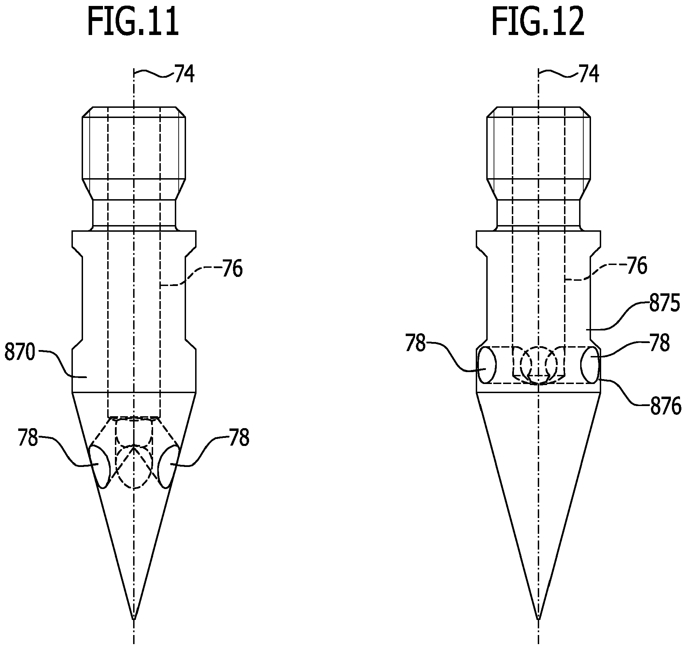

Die Fig. 11 zeigt in einer der Fig. 7 entsprechenden Weise eine mit dem Bezugszeichen 870 belegte Düse, die ebenfalls einen axialen Zuführkanal 76 aufweist und Austrittskanäle 78, die mit dem Zuführkanal jeweils einen Winkel 80 einschließen. Der Winkel 80 beträgt beispielsweise wie bei der Düse 62 ungefähr 10° bis 50°, beispielsweise ungefähr 40°.

Die Düse 870 ist endseitig spitz ausgestaltet und eignet sich beispielsweise bei Bearbeitung eines Bodens 16 mit Naturrasen oder Rollrasen, sie kann jedoch auch bei Hybridrasen eingesetzt werden.

Die Fig. 12 zeigt in einer der Fig. 7 entsprechenden Weise eine mit dem Bezugszeichen 875 belegte Düse. Die Düse 875 umfasst einen axialen Zuführkanal 76 sowie Austrittskanäle 78, die unter einem Winkel 80 relativ zum Zuführkanal 76 ausgerichtet sind. Bei der Düse 875 beträgt der Winkel 80 90° oder ungefähr 90°, d.h. die Austrittskanäle 78 sind senkrecht oder im Wesentlichen senkrecht zur Achse 74 ausgerichtet.

Die Düse 875 ist endseitig spitz ausgestaltet und eignet sich besonders bei der Behandlung eines Bodens 16 mit Hybridrasen. Die spitze Ausgestaltung ermöglicht es, die Kunststofffasern aufnehmende Schicht des Hybridrasens zu durchstechen. Die Ausrichtung der Austrittskanäle 76 verhindert deren Verstopfung durch Kunststoffteile des Hybridrasens.

Während Fluid aus den Düsen 62, 870 und 875 schräg nach außen bzw. zur Seite austreten kann, tritt Fluid aus der Düse 84 eher axial aus der Düse aus.

Alle Düsen 62, 84, 870 und 875 weisen in Richtung der Endseite eine Verjüngung auf, wobei bei den Düsen 62, 84 und 870 die Austrittskanäle 78 bzw. 86 im Bereich der Verjüngung positioniert sind. Bei der Düse 875 sind die Austrittskanäle 78 demgegenüber nicht im Bereich der Verjüngung positioniert, sondern im Bereich eines zylindrischen oder im Wesentlichen zylindrischen Abschnittes 876, an dem die Verjüngung noch nicht eingesetzt hat.

Je nach zu bearbeitendem Boden 16 und dessen Rasenbewuchs können bei der Vorrichtung 10 anstelle der Düsen 62 die Düsen 84, die Düsen 870 oder die Düsen 875 zum Einsatz kommen. Die nachfolgenden Aussagen in Bezug auf die Düse 62 gelten in entsprechender Weise für die Düsen 84, 870 und 875.

Wie insbesondere aus den Fig. 3 bis 6 weiter deutlich wird, sind die Injektionselemente 56 an einer Halteeinrichtung 88 gehalten. Über die Halteeinrichtung 88 sind die Injektionselemente 56 gemeinsam am Tragrahmen 26 beweglich gehalten, wobei die Halteeinrichtung 88 über zwei Antriebseinrichtungen 90 und 92 am Tragrahmen 26 beweglich gehalten ist.

Die Halteeinrichtung 88 umfasst ein Halteteil 94, das ausgestaltet ist als Halteplatte. Das Halteteil 94 ist vorliegend horizontal und parallel zu einer Berührebene der Vorrichtung 10 ausgerichtet, die vorliegend von den Auflageelementen 28 definiert wird.

Im Halteteil 94 sind Durchgangsöffnungen 96 gebildet, deren jeweils eine einem Injektionselement 56 zugeordnet ist. Am Rand 98 einer jeweiligen Durchgangsöffnung ist ein Fixierelement 100 der Halteeinrichtung 88 festgelegt. Das Fixierelement 100 umfasst ein Führungsglied 102 unterhalb des Halteteils 94 und zu dessen Festlegung ein Halteglied 104 oberhalb des Halteteils 94. Das Injektionselement 56 ist im Führungsglied 102 axial beweglich geführt und kann an diesem in vertikaler Richtung nach oben und nach unten verschoben werden. Die Schlauchleitung 64 ist vorgesehen, um die fluidwirksame Verbindung des Injektionselementes 56 mit der Fluidleitung 68 zu vereinfachen.

Das Rohr 60 ist derjenige Bestandteil des Injektionselementes 56, der im Führungsglied 102 beweglich geführt ist.

Am Rohr 60 ist ein Stützglied 106 unterhalb des Fixierelementes 100 festgelegt. Das Stützglied 106 ist ausgestaltet als Hülse und umfasst einen Ringkragen, an dem sich ein Rückstellelement 108 abstützt, dessen gegenüberliegende Seite am Führungsglied 102 abgestützt ist. Das Rückstellelement 108 ist ausgestaltet als Druckfeder 110. Wirkt auf die Düse 62 eine Kraft nach oben, kann das Injektionselement 56 entgegen der Wirkung der Druckfeder 110 verschoben werden. Entfällt die Kraft, wird das Injektionselement 56 unter der Wirkung der Druckfeder 110 wieder in die Ausgangslage zurückverschoben (Fig. 6).

Das Stützglied 106 kann sich im Normalfall an einem Stützteil 112 der Halteeinrichtung 88 abstützen. Das Stützteil 112 ist ein im Querschnitt trapezförmiges Element, das unterhalb des Halteteils 94 angeordnet und mit diesem fest verbunden ist. Das Stützteil 112 ist rinnenförmig ausgestaltet.

Die Vorrichtung 10 umfasst ferner Dichtelemente 114, wobei einem jeweiligen Injektionselement 56 ein Dichtelement 114 zugeordnet ist. Die Dichtelemente 114 sind ausgestaltet als identische Dichtteller 116.

Ein jeweiliger Dichtteller 116 ist koaxial zu dem ihm zugeordneten Injektionselement 56 ausgerichtet. Das Injektionselement 56 durchgreift den Dichtteller 116 und ragt in Richtung des Bodens 16 über diesen hinaus. Beispielsweise beträgt der Überstand des Endes der Düse 62 ungefähr 5 cm bis 10 cm.

Es kann vorgesehen sein, dass der Dichtteller 116 am Stützteil 112 gehalten ist. Im vorliegenden Fall ist allerdings ein Montageteil 118 vorgesehen, an dem der Dichtteller 116 untenseitig gehalten ist. Das Montageteil 118 ist im Querschnitt trapezförmig gebildet und ebenfalls rinnenförmig, wobei es parallel zum Stützteil 112 und unterhalb desselben verläuft. Vorteilhafterweise ist das Montageteil 118 äquidistant zum Stützteil 112 angeordnet.

Alternativ kann ein Dichtelement vorgesehen sein, das mehreren oder insbesondere allen Injektionselementen 56 zugeordnet ist. Ein derartiges Dichtelement kann zum Beispiel ein Dichtwulst sein, der die Injektionselemente 56 einfasst. Das Dichtelement kann an einem Dichtelementträger gehalten sein, der beispielsweise statt der Montageteile 118 an den Stützteilen 112 gehalten ist, oder der zum Beispiel an den Montageteilen 118 gehalten ist. Der Dichtelementträger ist beispielsweise plattenförmig, und die Rohre 60 können den Dichtelementträger durchgreifen.

Das Montageteil 118 kann sich beispielsweise unmittelbar am Stützteil 112 oder am Halteteil 94 abstützen. Vorliegend ist vorgesehen, dass die Montageteile 118 über ein Tragteil 120 miteinander verbunden sind. Das Tragteil 120 ist mit einem unterhalb des Halteteils 94 versehenen Träger 122 versehen und einem diesen durchgreifenden Träger 124. Der Träger 124 ist fest verbunden mit der Antriebseinrichtung 90, mit der die Halteeinrichtung 88 wie nachfolgend erläutert angehoben und abgesenkt werden kann.

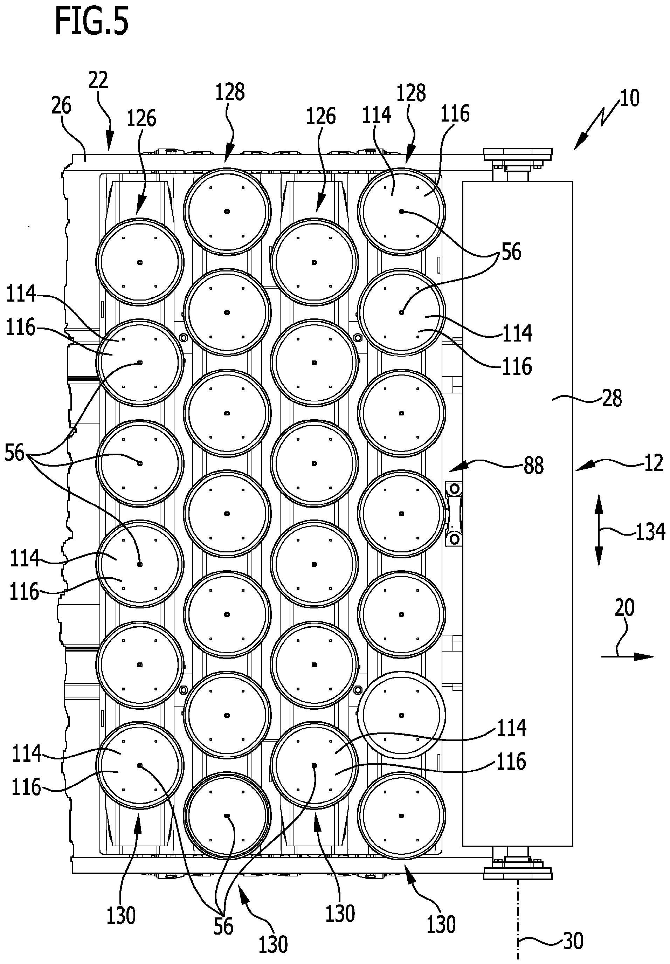

Die Vorrichtung 10 umfasst, wie erwähnt, 26 Injektionselemente 56. Die Injektionselemente 56 sind gleichmäßig an der Halteeinrichtung 88 angeordnet. Insbesondere sind die Injektionselemente 56 gemäß einem regelmäßigen, hexagonalen Muster an der Halteeinrichtung 88 gehalten. Dies wird besonders aus Fig. 5 deutlich, die die Vorrichtung 10 von unten zeigt.

Es sind zwei erste Gruppen 126 zu je sechs Injektionselementen 56 in Reihenanordnung und zwei zweite Gruppen 128 zu je sieben Injektionselementen 56 in Reihenanordnung vorgesehen. Längs der Bearbeitungsrichtung 20 wechseln die ersten Gruppen 126 und die zweiten Gruppen 128 einander ab. Insgesamt sind vier Reihen 130 von Injektionselementen 56 vorhanden. Die Injektionselemente der zweiten Gruppen 128 sind auf Lücke zu den Injektionselementen 56 der ersten Gruppen 126 positioniert. Dadurch ergibt sich die regelmäßige hexagonale Anordnung der Injektionselemente 56.

Auch die Dichtteller 116 sind regelmäßig zueinander und nach einem hexagonalen Muster an der Halteeinrichtung 88 positioniert. Der Abstand benachbarter Injektionselemente 56 voneinander beträgt ungefähr 15 cm bis 30 cm, beispielsweise 25 cm.

Bei der Reihenanordnung der Injektionselemente 56 kann der Aufbau der Vorrichtung 10 dadurch vereinfacht werden, dass einer jeweiligen ersten Gruppe 126 gemeinsam ein Stützteil 112 zugeordnet ist. Die sechs Injektionselemente 56 der ersten Gruppe 126 können sich dabei seitlich nebeneinander über das jeweilige Stützglied 106 an dem gemeinsamen Stützteil 112 abstützen. Entsprechendes gilt für die sieben Injektionselemente 56 der jeweils zweiten Gruppen 128. Diese können sich ebenfalls seitlich nebeneinander an einem gemeinsamen Stützteil 112 abstützen (Fig. 3).

Entsprechendes gilt bei den Montageteilen 118 für die Dichtteller 116. Dichtteller 116, die einer jeweiligen Gruppe 126, 128 von Injektionselementen 56 zugeordnet sind, stützen sich an einem gemeinsamen Montageteil 118 ab.

Durch die vorstehende Ausgestaltung kann die Konstruktion der Halteeinrichtung 88 vereinfacht werden. Es sind aufgrund der vier Reihen 130 von Injektionselementen 56 nur vier Stützteile 112 und vier Montageteile 118 erforderlich.

Die Halteeinrichtung 88 umfasst ferner zwei Fixierteile 132, die das Halteteil 94 mit der Antriebseinrichtung 90 verbinden. Die Fixierteile 132 sind jeweils teilweise plattenförmig als Fixierplatten ausgestaltet. Die Fixierteile 132 sind senkrecht zur vom Halteteil 94 definierten Ebene ausgerichtet und verlaufen dementsprechend vertikal.

Die Fixierteile 132 sind quer zur Bearbeitungsrichtung 20 (in Querrichtung 134) der Vorrichtung 10 voneinander beabstandet. Ein oberer Abschnitt 136 des Tragrahmens 26 ist zwischen den Fixierteilen 132 angeordnet. Die Fixierteile 132 nehmen in Querrichtung 134 zwischen sich daher die Antriebseinrichtung 90, die Antriebseinrichtung 92 und den oberen Abschnitt 136 des Tragrahmens 26 auf.

Am oberen Abschnitt 136 sind auch der Kompressor 36 und der Behälter 52 festgelegt.

Die Fixierteile umfassen Durchgangsöffnungen 138. Die Rohre 70 der Fluidleitung 68 können die Durchgangsöffnungen 138 durchgreifen, so dass die Fluidleitung 68 an der Halteeinrichtung 88 gehalten ist. Dabei ist die Fluidleitung 68 so angeordnet, dass die Rohre 70 im Abstand zum Halteteil 94 positioniert sind. In dem Zwischenraum finden die Ventile 66 und die Schlauchleitungen 64 Platz, so dass sie im Fall einer Störung auf besonders einfache Weise zugänglich sind.

Es kann vorgesehen sein, dass die Injektionselemente 56 ganz oder teilweise austauschbar sind, insbesondere manuell und/oder werkzeuglos. Beispielsweise kann lediglich die Düse 62 (oder 84, 870, 875) oder das Rohr 60 mit Düse ausgetauscht werden. Denkbar ist auch ein Austausch der Injektionselemente 56 komplett, oder ohne Ventile 66.

Bei einer in der Zeichnung nicht dargestellten vorteilhaften Ausführungsform kann vorgesehen sein, dass die Injektionselemente 56 nicht verschieblich relativ zum Halteteil 94 sind. Die Injektionselemente 56 können stattdessen starr an den Fixierelementen 100 festgelegt sein. In diesem Fall können die Druckfedern 110 und die Stützglieder 106 entfallen. Ebenso können die Stützteile 112 entfallen.

Die Antriebseinrichtung 90 dient zum Anheben und zum Absenken der Halteeinrichtung 88 mit den daran gehaltenen Injektionselementen 56. Die Injektionselemente 56 können dabei geradlinig und insbesondere vertikal abgesenkt und angehoben werden zum Einführen in den Boden bzw. Entfernen aus dem Boden. Dabei werden die Injektionselemente 56 relativ zum Tragrahmen 26 bewegt.

Die Antriebseinrichtung 90 ist ausgestaltet als hydraulische Antriebseinrichtung und umfasst zwei Kolben-Zylinder-Aggregate 140. Die Kolben-Zylinder-Aggregate 140 sind links und rechts des oberen Abschnittes 136 angeordnet. Ein jeweiliger Zylinder 142 ist an einem Läuferelement 144 der Antriebseinrichtung 92 festgelegt. Ein jeweiliger Kolben 146 hält ein Fixierteil 132. Die Kolben-Zylinder-Aggregate 140 sind vertikal ausgerichtet.

Eine Hydraulikpumpe 147 ist über nicht gezeigte Hydraulikleitungen fluidwirksam mit den Kolben-Zylinder-Aggregaten 140 verbunden und von der Steuereinrichtung 72 ansteuerbar. Durch elektrische Ansteuerung der Hydraulikpumpe 147 können die Injektionselemente 56 gezielt angehoben und abgesenkt werden.

Es kann alternativ vorgesehen sein, dass Hydrauliköl über das Zugfahrzeug 34 bereitgestellt wird, so dass die Hydraulikpumpe 147 entfallen kann. Die Antriebseinrichtung 90 könnte auch als pneumatische Antriebseinrichtung ausgestaltet sein.

Die Kolben-Zylinder-Aggregate 140 sind mit dem Kolben 146 oberhalb der Zylinder 142 angeordnet montiert, so dass die Injektionselemente 56 im ausgefahrenen Zustand der Kolben 146 angehoben und im eingefahrenen Zustand der Kolben 146 abgesenkt sind (Figuren 3 und 4).

Die Antriebseinrichtung 92 dient zum Bewegen der Halteeinrichtung 88 und damit der Injektionselemente 56 längs und insbesondere in der Bearbeitungsrichtung 20 relativ zum Tragrahmen 26. Zu diesem Zweck umfasst die Antriebseinrichtung 92 je eine Verschiebeeinheit 148 links und rechts des oberen Abschnittes 136. Die jeweilige Verschiebeeinheit 148 ist am Tragrahmen 26 festgelegt und als pneumatische Verschiebeeinheit 148 ausgestaltet. Dementsprechend ist die Antriebseinrichtung 92 eine pneumatische Antriebseinrichtung. Alternativ kann eine hydraulische Antriebseinrichtung 92 vorgesehen sein.

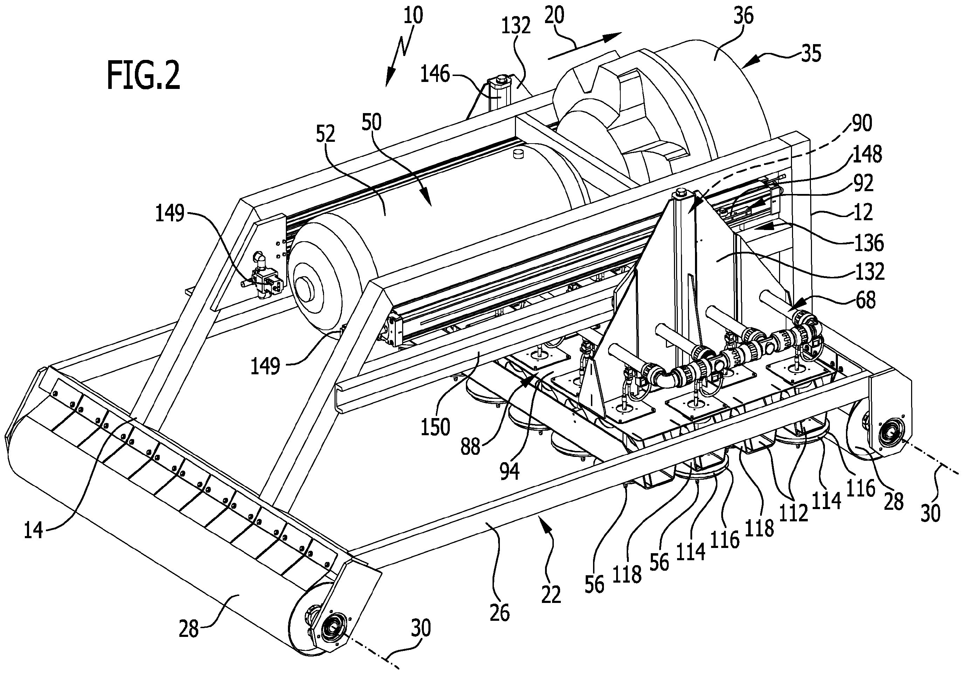

Pneumatikzylinder der jeweiligen Verschiebeeinheit 148 sind unter Zwischenschaltung eines jeweiligen Ventils 149 fluidwirksam mit dem Behälter 52 verbunden (Fig. 2, in der eine Druckgasleitung ausgeblendet ist). Die Ventile 149 sind von der Steuereinrichtung 72 elektrisch ansteuerbar.

Alternativ kann vorgesehen sein, dass die Pneumatikzylinder von einer individuellen oder gemeinsamen, nicht gezeigten Pumpe mit Druckluft beaufschlagbar sind, die von der Steuereinrichtung 72 ansteuerbar ist.

Unter Ansteuerung durch die Steuereinrichtung 72 kann die Verschiebeeinheit 148 gezielt angesteuert werden, so dass das jeweilige Läuferelement 144 und damit die Injektionselemente 56 geradlinig und insbesondere horizontal relativ zum Tragrahmen 26 verschoben werden können.

Das Läuferelement 144 ist plattenförmig ausgestaltet und an der Verschiebeeinheit 148 fixiert. Zusätzlich kann das Läuferelement 144 in eine jeweilige Führung 150 links und rechts des oberen Abschnittes 136 eingreifen. Die Führung 150 ist ausgestaltet als Schiene, die parallel zur Verschiebeeinheit 148 verläuft. Rollen 152 am Läuferelement 144 sind in der Schiene geführt (Figuren 3 und 4).

Die Injektionselemente 56 sind somit insgesamt jeweils geradlinig längsverschieblich (längs und insbesondere in der Bearbeitungsrichtung 20) und höhenverstellbar (anhebbar und absenkbar) relativ zur Trageinrichtung 22.

Nachfolgend wird unter Verweis insbesondere auf die Figuren 13 bis 18 die Funktionsweise der Vorrichtung 10 erläutert. Es ist dabei nicht-einschränkend angenommen, dass im Boden 16 Rohre 154 einer Rasenklimatisierungseinrichtung 156 verlegt sind. Die Rohre 154 sind in regelmäßigen Abständen zueinander und in einer Tiefe von beispielsweise ungefähr 10 cm von der Oberfläche im Boden 16 angeordnet.

Die Vorrichtung 10 wird mit vorzugsweise konstanter Geschwindigkeit längs der Bearbeitungsrichtung 20 über die Bodenfläche 18 bewegt. Druckluft wird in aufeinander folgenden Bearbeitungszyklen mit der Vorrichtung 10 in den Boden 16 injiziert. Dabei werden sukzessive in der Bearbeitungsrichtung 20 aufeinanderfolgende Behandlungsbereiche 158 mit Druckluft beaufschlagt.

Nicht-einschränkend wird angenommen, dass die Halteeinrichtung 88 zu Beginn des Bearbeitungszyklus angehoben ist und in Richtung der Vorderseite 12 des Tragrahmens 26 verschoben ist (Figur 13). Die Steuereinrichtung 72 steuert die Antriebseinrichtungen 90 und 92 derart an, dass zunächst die Halteeinrichtung 88 mit den Injektionselementen 56 vertikal abgesenkt wird, so dass die Injektionselemente 56 in den Boden 16 eingreifen. Die Injektionselemente 56 verbleiben ortsfest an dieser Position, unter Relativbewegung zum Tragrahmen 26 längs der Bearbeitungsrichtung 20. Dies liegt daran, dass die Vorrichtung 10 weiterhin in der Bearbeitungsrichtung 20 bewegt wird. Die Pneumatikzylinder der Antriebseinrichtung 92 können drucklos geschaltet werden, so dass die Halteeinrichtung 88 nicht aktiv entgegen der Bearbeitungsrichtung 20 zur Trageinrichtung 22 verschoben werden muss.

Denkbar ist jedoch auch, dass die Antriebseinrichtung 92 aktiviert ist.

Während die Injektionselemente 56 ortsfest am Behandlungsbereich 158 verbleiben, wird der Boden 16 über die Düsen 62 mit Druckluft beaufschlagt. Beispielsweise wird ein einzelner Druckluftstoß für eine Zeitdauer von ungefähr 0,3 Sekunden und mit einem Druck von ungefähr 5 bis 10 bar ausgeübt, vorzugsweise ungefähr 7 bar.

Die Figuren 15 und 18 zeigen, wie der jeweilige Druckluftstoß ausgehend von einer Düse 62 einen Wirksamkeitsbereich 160 im Boden 16 erfasst. Der Wirksamkeitsbereich 160 ist aufgrund der Parameterwahl für die Druckluftinjektion so groß, dass der Bereich zwischen benachbarten Rohren 154 und auch ein Bereich unterhalb der Rohre 154 von der Druckluft erfasst wird. Aneinander grenzende Wirksamkeitsbereiche 160 sichern somit, dass der Boden 16 im Wesentlichen über den gesamten Behandlungsbereich 158 mit Druckluft beaufschlagt wird. Die Grenzen des Behandlungsbereiches 158 sind in der Zeichnung in den Figuren 13 bis 18 mit zwei "X" gekennzeichnet.

Die Druckluftinjektion führt zur Lockerung des Bodens 16. Wasser und Luft können auf bessere Weise in den Boden 16 eindringen und das Wachstum des Rasenbewuchses 54 fördern. Außerdem wird die Drainagewirkung im Boden 16 verbessert. Es kann eine homogene Belüftung des Bodens durchgeführt werden.

Im weiteren Verlauf des Zyklus werden die Injektionselemente 56 weiter relativ zum Tragrahmen 26 verschoben, weil dieser sich weiterhin in der Bearbeitungsrichtung 20 bewegt (Figur 16).

Anschließend werden die Injektionselemente 56 angehoben (Figur 17). Die Injektionselemente 56 werden daraufhin mit einer Geschwindigkeit relativ zum Tragrahmen 26 in der Bearbeitungsrichtung 20 verschoben ist, die zumindest zeitweise größer ist als die Vorschubgeschwindigkeit der Vorrichtung 10. Die Injektionselemente 56 holen den Tragrahmen 26 gewissermaßen wieder ein. Dadurch ist die Möglichkeit gegeben, dass die Injektionselemente 56 wieder bis an die Vorderseite 16 des Tragrahmens 26 verschoben werden. Die Vorrichtung 10 nimmt dadurch wieder die in Figur 13 gezeigte Konfiguration ein, hat sich jedoch in der Bearbeitungsrichtung 20 ein Stück weiter bewegt.

Anschließend kann ein Behandlungsbereich 158 mit Druckluft beaufschlagt werden, der dem zuerst bearbeiteten Behandlungsbereich 158 in der Bearbeitungsrichtung 20 nachgelagert ist.

Die Steuereinrichtung 72 steuert die Antriebseinrichtungen 90, 92 derart, dass aufeinanderfolgende Behandlungsbereiche 158, die von den Injektionselementen 56 erfasst werden, aneinander grenzen. Der Boden 16 wird dadurch flächendeckend bearbeitet.

Die Eindringtiefe der Injektionselemente 56 in den Boden 16 ist vorliegend so eingestellt, dass lediglich die Düse 62 und ein Teil des Rohres 60 in den Boden 16 eingreift. Dabei ist eine Eindringtiefe von ungefähr 8 cm voreingestellt, so dass die Düsen 62 zu den Rohren 154 einen Sicherheitsabstand von ungefähr 2 cm aufweisen und eine Kollision der Düsen 62 mit den Rohren 154 vermieden werden kann. Durch die blasenartigen Wirksamkeitsbereiche 160 aufgrund der Ausgestaltung der Düse 62 kann der Boden 16 auch unterhalb der Rohre 154 gelockert werden. Dies erweist sich in der Praxis als besonders förderlich, um ein Austrocknen des Bodens 16 um die Rohre 154 herum zu vermeiden.

In dem Fall, dass eine Düse 62 bereits während des Eindringens in den Boden 16 auf ein Hindernis stößt, gezeigt am Beispiel eines Steines 162 in Figur 6, kann auf obige Ausführungen verwiesen werden. Das Injektionselement 56 wird entgegen der Wirkung der Druckfeder 110 verschoben.

Bei einer vorteilhaften Ausführungsform ist vorgesehen, dass die abgesenkten, in den Boden 16 eingreifenden Injektionselemente 56 vor der Fluidinjektion geringfügig angehoben werden, um beispielsweise 0,3 cm bis 0,5 cm. Dadurch wird unterhalb der Düsen 62 ein Freiraum im Boden 16 geschaffen. Das Vorhandensein des Freiraumes, dies zeigt sich in der Praxis, erweist sich als vorteilhaft für die Ausbreitung der Druckluft und für die Größe des Wirksamkeitsbereiches 160. Bezogen auf die Bearbeitungsrichtung 20 verbleiben die Injektionselemente 56 jedoch auch bei dieser Variante ortsfest am Boden 16, wobei sie relativ zum Tragrahmen 26 bewegt sind.

Im abgesenkten Zustand der Halteeinrichtung 88 kontaktieren die Dichtteller 116 die Bodenfläche 18 dichtend. Dadurch ist sichergestellt, dass die Druckluft nicht über die Bodenfläche 18 entweicht, sondern im Boden 16 verbleibt. Unebenheiten durch den Druckluftstoß wird vorgebeugt. Außerdem ist es von Vorteil, dass die Antriebseinrichtung 90 die Halteeinrichtung 88 und damit die Dichtteller 116 im abgesenkten Zustand weiterhin mit einer Stützkraft in Richtung auf den Boden 16 beaufschlagt. Dadurch können die Dichtteller 116 besonders gut dichtend auf der Bodenfläche 18 aufliegen.

Die erfindungsgemäße Vorrichtung 10 erlaubt eine zügige und flächendeckende Pflege des Bodens 16 im quasi-kontinuierlichen Betrieb. Es ist möglich, die Vorrichtung 10 über die Bodenfläche 18 zu bewegen und durch die über die Steuereinrichtung 72 gesteuerte Bewegung der Injektionselemente 56 relativ zur Trageinrichtung 22 sukzessive den Boden 16 an den Behandlungsbereichen 158 flächendeckend mit Druckluft zu beaufschlagen. Insbesondere ist es nicht erforderlich, während einer Injektion von Druckluft die Vorrichtung 10 anzuhalten. Der Vorschub muss dadurch nicht laufend unterbrochen werden, und das Arbeitstempo kann hoch gehalten werden. Die Vorrichtung 10 eignet sich daher insbesondere auch zur Bodenpflege größerer Bodenflächen 18, speziell Fußballfeldern.

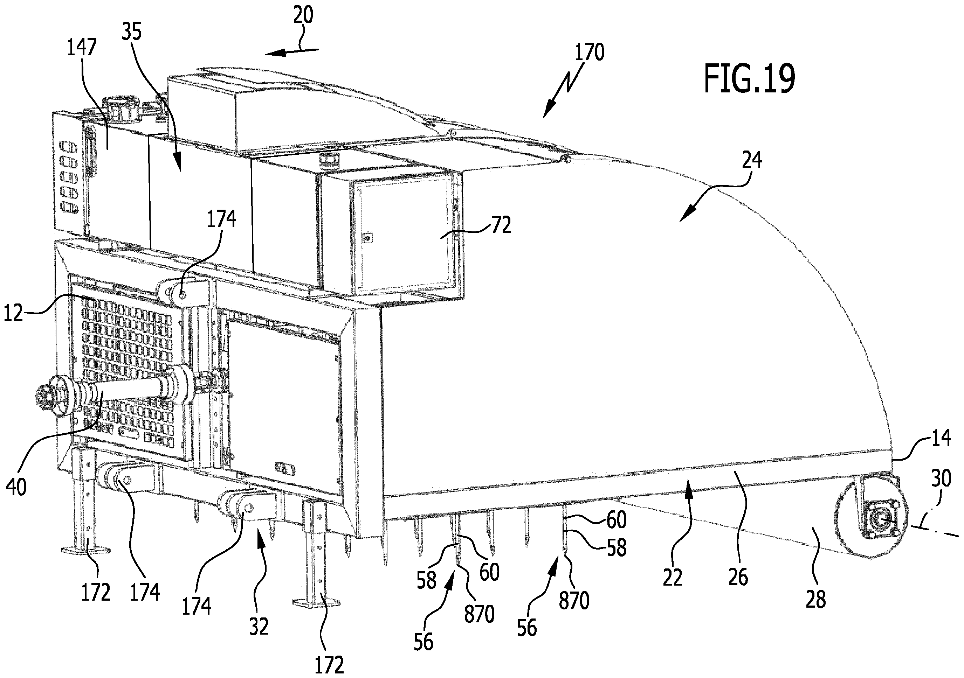

Fig. 19 zeigt in einer perspektivischen Darstellung eine mit dem Bezugszeichen 170 belegte vorteilhafte Ausführungsform einer erfindungsgemäßen Bodenbehandlungsvorrichtung (Vorrichtung 170). Für gleiche oder gleichwirkende Merkmale und Bauteile der Vorrichtungen 10 und 170 werden identische Bezugszeichen benutzt. Die mit der Vorrichtung 10 erzielbaren Vorteile können mit der Vorrichtung 170 ebenfalls erzielt werden. Zur Vermeidung von Wiederholungen kann daher auf die voranstehenden Ausführungen verwiesen werden. Soweit nachfolgend keine Unterschiede zwischen den Vorrichtungen 10 und 170 erläutert werden, stimmen diese in funktioneller Hinsicht überein.

Insbesondere ist die Vorrichtung 170 derart ausgebildet, eine Fluidinjektion in den Boden 16 auszuführen, wie diese bei der Vorrichtung 10 am Beispiel der Fig. 13 bis 18 erläutert wurde. Dementsprechend können auch bei der Vorrichtung 170 die Injektionselemente 56 abgesenkt werden und in den Boden 16 eindringen, unter fortgesetzter Bewegung der Trageinrichtung 22 im Boden 16 ortsfest verbleiben, Fluid in den Boden 16 injizieren, angehoben werden und relativ zur Trageinrichtung 22 wieder in der Bearbeitungsrichtung 20 verschoben werden.

Die Injektionselemente 56 können vor der Fluidinjektion geringfügig angehoben werden, um einen Freiraum im Boden zu schaffen und die Wirkung der Fluidinjektion zu steigern. Die Fluidinjektion kann so ausgeführt werden, dass vom Wirksamkeitsbereich 160 jeweilige Bereiche zwischen den Rohren 154 und unterhalb der Rohre 154 einer Rasenklimatisierungseinrichtung 156 erfasst werden können.

Bei der Vorrichtung 170 kommen ebenfalls die Halteeinrichtung 88 und die Antriebseinrichtungen 90, 92 wie bei der Vorrichtung 10 zum Einsatz, ferner der Kompressor 36 und die Speichereinrichtung 50. Die Speichereinrichtung 50 ist entsprechend wie bei der Vorrichtung 10 mit den Injektionselementen 56 fluidwirksam verbunden. Ebenso sind Dichtteller 114 oder der vorstehend genannte Dichtelementträger und Rückstellelemente 108 vorhanden. Die vorstehend genannten Komponenten sind in Fig. 19 aufgrund des darin im Wesentlichen geschlossen dargestellten Gehäuses 24 nicht zu sehen.

Bei der Vorrichtung 170 kommt nur ein walzenförmiges Auflageelement 28 zum Einsatz, das im Bereich der Rückseite 14 am Tragrahmen 26 gehalten ist und die Berührebene der Vorrichtung 170 definiert. An der Vorderseite 12 ist bei der Vorrichtung 170 kein walzenförmiges Auflageelement vorhanden. Am Tragrahmen 26 sind stattdessen Stützelemente 172 angeordnet. Über die Stützelemente 172 kann sich die Vorrichtung 170 bei Außerbetriebsetzung abstützen. Für den Betrieb der Vorrichtung 170 werden die Stützelemente 172 entfernt oder so am Tragrahmen 26 verschoben, dass sie die Bodenfläche 18 nicht kontaktieren.

Die Kupplungseinrichtung 32 umfasst bei der Vorrichtung 170 am Tragrahmen 26 festgelegte oder von diesem ausgebildete Kupplungselemente 174. Die Kupplungselemente 174, vorliegend drei Stück, ermöglichen eine Fixierung der Vorrichtung 170 am in Fig. 19 nicht dargestellten Zugfahrzeug 34. Korrespondierende Kupplungselemente am Zugfahrzeug 34 koppeln mit den Kupplungselementen 174, wodurch die Vorrichtung 170 einseitig am Zugfahrzeug 34 abgestützt sein kann. Sind die Kupplungselemente des Zugfahrzeuges 34 höhenverstellbar, ist dadurch beispielsweise die Möglichkeit gegeben, die Auflagekraft der Vorrichtung 170 über das Auflageelement 28 auf der Bodenfläche 18 zu variieren. Dies erweist sich als vorteilhaft, um ein optimales Ergebnis der Bodenglättung zu erzielen.

Bei der Vorrichtung 170 kommen beispielsweise die in Fig. 19 dargestellten Düsen 870 zur Behandlung von Hybridrasen zum Einsatz.

### Bezugszeichen

- 10: Bodenbehandlungsvorrichtung (Vorrichtung)
- 12: Vorderseite
- 14: Rückseite
- 16: Boden
- 18: Bodenfläche
- 20: Bearbeitungsrichtung
- 22: Trageinrichtung
- 24: Gehäuse
- 26: Tragrahmen
- 28: Auflageelemente
- 30: Drehachse
- 32: Kupplungseinrichtung
- 34: Zugfahrzeug
- 35: Fluidbereitstellungseinrichtung
- 36: Kompressor
- 38: Nebenabtrieb
- 40: Welle
- 42: Getriebe
- 44: Riemenscheibe
- 46: Riemenscheibe
- 48: Riemen
- 50: Speichereinrichtung
- 52: Behälter
- 54: Rasenbewuchs
- 56: Injektionselement
- 58: Lanze
- 60: Rohr
- 62: Düse
- 64: Schlauchleitung
- 66: Ventil
- 68: Fluidleitung
- 70: Rohr
- 72: Steuereinrichtung
- 74: Achse
- 76: Zuführkanal
- 78: Austrittskanal
- 80: Winkel
- 82: Achse
- 84: Düse
- 86: Austrittskanal
- 870: Düse
- 875: Düse
- 876: Abschnitt
- 88: Halteeinrichtung
- 90: Antriebseinrichtung
- 92: Antriebseinrichtung
- 94: Halteteil
- 96: Durchgangsöffnung
- 98: Rand
- 100: Fixierelement
- 102: Führungsglied
- 104: Halteglied
- 106: Stützglied
- 108: Rückstellelement
- 110: Druckfeder
- 112: Stützteil
- 114: Dichtelement
- 116: Dichtteller
- 118: Montageteil
- 120: Tragteil
- 122: Träger
- 124: Träger
- 126: 1. Gruppe
- 128: 2. Gruppe
- 130: Reihe
- 132: Fixierteil
- 134: Querrichtung
- 136: oberer Abschnitt
- 138: Durchgangsöffnung
- 140: Kolben-Zylinder-Aggregat
- 142: Zylinder
- 144: Läuferelement
- 146: Kolben
- 147: Hydraulikpumpe
- 148: Verschiebeeinheit
- 149: Ventil
- 150: Führung
- 152: Rollen
- 154: Rohr
- 156: Rasenklimatisierungseinrichtung
- 158: Behandlungsbereich
- 160: Wirksamkeitsbereich
- 162: Stein
- 170: Vorrichtung
- 172: Stützelement
- 174: Kupplungselement

## Patentansprüche

1. Bodenbehandlungsvorrichtung für Böden (16) mit Rasenbewuchs (54), insbesondere Böden (16) von Sport- oder Freizeitanlagen, speziell mit Rasenklimatisierungseinrichtung (156), wobei die Bodenbehandlungsvorrichtung (10; 170) eine Trageinrichtung (22) umfasst, eine Mehrzahl von an dieser direkt oder indirekt gehaltenen Injektionselementen (56), sowie eine Fluidbereitstellungseinrichtung (35), die mit den Injektionselementen (56) fluidwirksam verbunden ist, wobei die Bodenbehandlungsvorrichtung (10; 170) mindestens eine Antriebseinrichtung (90, 92) umfasst, über welche die Injektionselemente (56) relativ zur Trageinrichtung (22) zum einen absenkbar und anhebbar sind sowie zum anderen beweglich längs einer Bearbeitungsrichtung (20) der Bodenbehandlungsvorrichtung (10; 170), wobei die Injektionselemente (56) unter Absenken in den Boden einführbar sind, um Fluid an einem Behandlungsbereich (158) in den Boden (16) zu injizieren, wobei die Injektionselemente (56) während des Eingreifens in den Boden (16) am Behandlungsbereich (158) ortsfest verbleiben, unter Relativbewegung zu der in der Bearbeitungsrichtung (20) bewegten Trageinrichtung (22), wobei die Injektionselemente (56) nach der Fluidinjektion anhebbar sind und in der Bearbeitungsrichtung (20) relativ zur Trageinrichtung (22) bewegbar sind, wobei die Injektionselemente (56) bei erneutem Absenken in den Boden (16) an einem weiteren Behandlungsbereich (158) einführbar sind, der dem erstgenannten Behandlungsbereich (158) in der Bearbeitungsrichtung (20) nachgelagert ist, wobei die Bodenbehandlungsvorrichtung (10; 170) eine Halteeinrichtung (88) mit einem Halteteil (94) umfasst, an dem die Injektionselemente (56) gehalten sind, wobei die Halteeinrichtung (88) über die mindestens eine Antriebseinrichtung (90, 92) mit der Trageinrichtung (22) koppelt, so dass die Injektionselemente (56) gemeinsam anhebbar und absenkbar sowie längs der Bearbeitungsrichtung (20) bewegbar sind.

2. Bodenbehandlungsvorrichtung nach Anspruch 1, **dadurch gekennzeichnet, dass** die Bodenbehandlungsvorrichtung (10; 170) so ausgebildet ist, dass in Bearbeitungsrichtung (20) aufeinanderfolgende Behandlungsbereiche (158) aneinander grenzen oder einander überlappen, und/oder dass die Injektionselemente (56) derart relativ zueinander positioniert sind, dass am Behandlungsbereich (158) jeweils auftretende Wirksamkeitsbereiche (160) der Fluidinjektionen der einzelnen Düsen (62; 84; 870; 875) einander überlappen oder aneinander grenzen.

3. Bodenbehandlungsvorrichtung nach Anspruch 1 oder 2, **dadurch gekennzeichnet, dass** die mindestens eine Antriebseinrichtung (90, 92) elektrisch ansteuerbar ist und dass die Bodenbehandlungsvorrichtung (10; 170) eine Steuereinrichtung (72) umfasst zum Ansteuern der mindestens einen Antriebseinrichtung, und/oder dass die mindestens eine Antriebseinrichtung (90, 92) als mechanische, elektrische, hydraulische, pneumatische und/oder magnetische Antriebseinrichtung (90, 92) ausgestaltet ist.

4. Bodenbehandlungsvorrichtung nach einem der voranstehenden Ansprüche, **dadurch gekennzeichnet, dass** zumindest eines der Folgenden gilt:
- die Injektionselemente (56) sind mit der mindestens einen Antriebseinrichtung (90, 92) geradlinig absenkbar und anhebbar und/oder sind geradlinig relativ zur Trageinrichtung (22) längs der Bearbeitungsrichtung (20) bewegbar;
- die Injektionselemente (56) sind vertikal oder im Wesentlichen vertikal absenkbar und anhebbar und/oder die Injektionselemente (56) sind horizontal oder im Wesentlichen horizontal längs der Bearbeitungsrichtung (20) beweglich;
- die Injektionselemente (56) sind längs der Bearbeitungsrichtung (20) und/oder zum Anheben und Absenken relativ zur Trageinrichtung (22) verschieblich.

5. Bodenbehandlungsvorrichtung nach einem der voranstehenden Ansprüche, **dadurch gekennzeichnet, dass** die Bodenbehandlungsvorrichtung (10; 170) eine erste Antriebseinrichtung (90) umfasst zum Anheben und Absenken der Injektionselemente (56), insbesondere eine hydraulische Antriebseinrichtung (90), sowie eine zweite Antriebseinrichtung (92) zum Bewegen der Injektionselemente (56) längs der Bearbeitungsrichtung (20), insbesondere eine pneumatische Antriebseinrichtung (92).

6. Bodenbehandlungsvorrichtung nach einem der voranstehenden Ansprüche, **dadurch gekennzeichnet, dass** zumindest eines der Folgenden gilt:
- im Halteteil (94) sind Durchgangsöffnungen (96) gebildet, durch die die Injektionselemente (56) hindurchgreifen und an deren Rändern (98) die Injektionselemente (56) unbeweglich fixiert oder beweglich geführt sind;
- das Halteteil (94) ist zumindest bereichsweise plattenförmig ausgestaltet;
- die Injektionselemente (56) sind, insbesondere unabhängig voneinander, relativ zum Halteteil (94) verschieblich ausgebildet, wobei eine Verschiebung eines jeweiligen Injektionselementes (56) relativ zum Halteteil (94) vorzugsweise entgegen der Wirkung eines jeweiligen Rückstellelementes (108) erfolgt, welches das Injektionselement (56) in Richtung auf den Boden (16) vorspannt, wobei die Halteeinrichtung (88) ein Stützteil (112) umfasst oder bildet, an dem sich das Injektionselement (56) in Richtung auf den Boden (16) abstützt;
- an der Halteeinrichtung (88) ist eine Fluidleitung (68) gehalten, über die die Injektionselemente (56) mit der Fluidbereitstellungseinrichtung (35) strömungsverbunden sind;
- die Bodenbehandlungsvorrichtung (10; 170) umfasst mindestens ein Dichtelement (114), das sich an der Halteeinrichtung (88) abstützt und in deren abgesenkten Zustand auf dem Boden (16) aufliegt, wobei das Dichtelement (116) oder ein Rand des Dichtelementes mindestens ein Injektionselement (56) einfasst.

7. Bodenbehandlungsvorrichtung nach einem der voranstehenden Ansprüche, **dadurch gekennzeichnet, dass** die Injektionselemente (56) nach Einführen in den Boden (16) und vor Ausüben der Fluidinjektion mittels der mindestens einen Antriebseinrichtung (90, 92) anhebbar sind, um einen Freiraum unterhalb der Injektionselemente (56) im Boden (16) bereitzustellen.

8. Bodenbehandlungsvorrichtung nach einem der voranstehenden Ansprüche, **dadurch gekennzeichnet, dass** eine Fluidinjektion durchführbar ist, die zumindest einen der folgenden Parameter umfasst:
- einzelner Druckstoß oder mehrere aufeinanderfolgende Druckstöße;
- Fluiddruck von ungefähr 5 bar bis 10 bar;
- Dauer eines jeweiligen Druckstoßes ungefähr 0,1 s bis 0,5 s;
- Eingreiftiefe der Injektionselemente (56) in den Boden ca. 5 cm bis 15 cm.

9. Bodenbehandlungsvorrichtung nach einem der voranstehenden Ansprüche, **dadurch gekennzeichnet, dass** die Injektionselemente (56) lanzenförmig ausgestaltet sind oder Lanzen (58) umfassen, und/oder dass die Injektionselemente (56) endseitig oder an einem Endabschnitt mit einer jeweiligen Düse (62; 84; 870; 875) versehen sind, vorzugsweise dass die Düse (62; 870; 875) mindestens einen Austrittskanal (78) für Fluid umfasst, der im Winkel (80) zu einem axialen Zuführkanal (76) des Injektionselementes (56) ausgerichtet ist.

10. Bodenbehandlungsvorrichtung nach einem der voranstehenden Ansprüche, **dadurch gekennzeichnet, dass** die Injektionselemente (56) gleichmäßig voneinander beabstandet sind und/oder dass die Injektionselemente (56) in einem regelmäßigen Muster zueinander angeordnet sind, insbesondere einem hexagonalen oder rechteckigen Muster.

11. Bodenbehandlungsvorrichtung nach einem der voranstehenden Ansprüche, **dadurch gekennzeichnet, dass** die Injektionselemente (56) ganz oder teilweise einzeln, vorzugsweise manuell und/oder werkzeuglos austauschbar sind.

12. Bodenbehandlungsvorrichtung nach einem der voranstehenden Ansprüche, **dadurch gekennzeichnet, dass** das Fluid ein Druckgas oder Druckgasgemisch ist oder umfasst, insbesondere Druckluft, oder dass das Fluid eine Flüssigkeit ist oder umfasst.

13. Bodenbehandlungsvorrichtung nach einem der voranstehenden Ansprüche, **dadurch gekennzeichnet, dass** die Fluidbereitstellungseinrichtung (35) einen Kompressor (36) zum Bereitstellen von Fluid umfasst und eine mit diesem strömungsverbundene Speichereinrichtung (50) für das Fluid, das mit den Injektionselementen (56) strömungsverbunden ist, insbesondere dass die Fluidbereitstellungseinrichtung (35) eine Fluidleitung (68) umfasst, an die die Injektionselemente (56) parallel angeschlossen sind.

14. Bodenbehandlungsvorrichtung nach einem der voranstehenden Ansprüche, **dadurch gekennzeichnet, dass** an der Trageinrichtung (22) mindestens ein insbesondere walzenförmiges Auflageelement (28) angeordnet ist, zum Aufliegen auf der Bodenfläche (16), das den Injektionselementen (56) in Bearbeitungsrichtung (20) vorgelagert oder nachgelagert ist.

15. Bodenbehandlungsvorrichtung nach einem der voranstehenden Ansprüche, **dadurch gekennzeichnet, dass** die Bodenbehandlungsvorrichtung (10; 170) einen Fahrantrieb umfasst zum Verfahren auf der Bodenfläche und/oder dass die Bodenbehandlungsvorrichtung (10; 170) eine Kupplungseinrichtung (32) umfasst zum Ankuppeln an ein Zug- oder Schubfahrzeug (34).

## Claims

1. A ground treatment apparatus for ground (16) on which grass is grown (54), in particular the ground (16) at sports or leisure facilities, in particular with a grass conditioning device (156), wherein the ground treatment apparatus (10; 170) comprises a support device (22), a plurality of injection elements (56) held directly or indirectly on the latter, and a fluid providing device (35) that is fluidically connected to the injection elements (56), wherein the ground treatment apparatus (10; 170) comprises at least one drive device (90, 92) by which the injection elements (56) are on the one hand lowerable and raisable in relation to the support device (22) and on the other hand movable along a working direction (20) of the ground treatment apparatus (10; 170), wherein the injection elements (56) are insertable into the ground by being lowered in order to inject fluid into the ground (16) in a treatment region (158), wherein the injection elements (56) remain stationary during engagement in the ground (16) in the treatment region (158), with relative movement in relation to the support device (22) that is moved in the working direction (20), wherein the injection elements (56) are raisable after the injection of fluid and are movable in the working direction (20) in relation to the support device (22), wherein, on being lowered again, the injection elements (56) are insertable into the ground (16) in a further treatment region (158) that is downstream of the first-mentioned treatment region (158), as seen in the working direction (20), wherein the ground treatment apparatus (10; 170) comprises a holding device (88) having a holding part (94) on which the injection elements (56) are held, wherein the holding device (88) is coupled to the support device (22) by way of the at least one drive device (90, 92), so that the injection elements (56) are raisable and lowerable as well as movable along the working direction (20) in common.

2. The ground treatment apparatus in accordance with claim 1, **characterized in that** the ground treatment apparatus (10; 170) is configured such that treatment regions (158) that succeed one another in the working direction (20) adjoin one another or overlap one another, and/or **in that** the injection elements (56) are positioned in relation to one another such that effective regions (160) of the fluid injections of the individual nozzles (62; 84; 870; 875) respectively occurring in the treatment region (158) overlap one another or adjoin one another.

3. The ground treatment apparatus in accordance with claim 1 or 2, **characterized in that** the at least one drive device (90, 92) is controllable electrically, and **in that** the ground treatment apparatus (10; 170) comprises a control device (72) for controlling the at least one drive device, and/or **in that** the at least one drive device (90, 92) is configured as a mechanical, electrical, hydraulic, pneumatic and/or magnetic drive device (90, 92).

4. The ground treatment apparatus in accordance with one of the preceding claims, **characterized in that** at least one of the following applies:
- the injection elements (56) are lowerable and raisable by the at least one drive device (90, 92) in a straight line and/or are movable along the working direction (20) in a straight line in relation to the support device (22);
- the injection elements (56) are lowerable and raisable vertically or substantially vertically, and/or **in that** the injection elements (56) are movable horizontally or substantially horizontally along the working direction (20);
- the injection elements (56) are displaceable along the working direction (20) and/or for raising and lowering in relation to the support device (22).

5. The ground treatment apparatus in accordance with one of the preceding claims, **characterized in that** the ground treatment apparatus (10; 170) comprises, for raising and lowering the injection elements (56), a first drive device (90), in particular a hydraulic drive device (90), and a second drive device (92) for moving the injection elements (56) along the working direction (20), in particular a pneumatic drive device (92).

6. The ground treatment apparatus in accordance with one of the preceding claims, **characterized in that** at least one of the following applies:
- there are formed in the holding part (94) through openings (96) through which the injection elements (56) pass and at the edges (98) whereof the injection elements (56) are immovably fixed or movably guided;
- the holding part (94) is configured as a plate, at least in certain regions;
- the injection elements (56) are formed to be displaceable in relation to the holding part (94), in particular independently of one another, wherein a respective injection element (56) is displaced in relation to the holding part (94) preferably counter to the action of a respective restoring element (108) that biases the injection element (56) in the direction of the ground (16), wherein the holding device (88) comprises or forms a bracing part (112) against which the injection element (56) is braced in the direction of the ground (16);
- a fluid conduit (68) through which the injection elements (56) are fluidically connected to the fluid providing device (35) is held on the holding device (88);
- the ground treatment apparatus (10; 170) comprises at least one sealing element (114) that is supported on the holding device (88) and that, in the lowered condition of the latter, lies on the ground (16), wherein the sealing element (116) or an edge of the sealing element surrounds at least one injection element (56).

7. The ground treatment apparatus in accordance with one of the preceding claims, **characterized in that**, after the injection elements (56) have been inserted into the ground (16) and before the fluid injection is performed, they are raisable by means of the at least one drive device (90, 92) in order to provide a free space in the ground (16), below the injection elements (56).

8. The ground treatment apparatus in accordance with one of the preceding claims, **characterized in that** a fluid injection that comprises at least one of the following parameters is executable:
- individual pressure stroke, or a plurality of successive pressure strokes;
- fluid pressure of approximately 5 bar to 10 bar;
- duration of each pressure stroke approximately 0.1 s to 0.5 s;
- depth of engagement of the injection elements (56) in the ground approximately 5 cm to 15 cm.

9. The ground treatment apparatus in accordance with one of the preceding claims, **characterized in that** the injection elements (56) take the form of lances or comprise lances (58), and/or that the injection elements (56) are provided with a respective nozzle (62; 84; 870; 875) at the end or in an end portion, preferably that the nozzle (62; 870; 875) comprises at least one exit channel (78) for fluid that is oriented at an angle (80) to an axial supply channel (76) of the injection element (56).

10. The ground treatment apparatus in accordance with one of the preceding claims, **characterized in that** the injection elements (56) are evenly spaced from one another, and/or that the injection elements (56) are arranged in a regular pattern in relation to one another, in particular a hexagonal or rectangular pattern.

11. The ground treatment apparatus in accordance with one of the preceding claims, **characterized in that** the injection elements (56) are individually entirely or partly replaceable, preferably manually and/or without tools.

12. The ground treatment apparatus in accordance with one of the preceding claims, **characterized in that** the fluid is or comprises a compressed gas or a compressed gas mixture, in particular compressed air or that the fluid is or comprises a liquid.

13. The ground treatment apparatus in accordance with one of the preceding claims, **characterized in that** the fluid providing device (35) comprises a compressor (36) for providing fluid and a storage device (50), fluidically connected thereto, for the fluid, which is fluidically connected to the injection elements (56), in particular that the fluid providing device (35) comprises a fluid conduit (68) to which the injection elements (56) are attached in parallel.

14. The ground treatment apparatus in accordance with one of the preceding claims, **characterized in that** at least one in particular roller-shaped surface contact element (28) is arranged on the support device (22) for lying on the ground surface (16) and is arranged upstream or downstream of the injection elements (56), as seen in the working direction (20).

15. The ground treatment apparatus in accordance with one of the preceding claims, **characterized in that** the ground treatment apparatus (10; 170) comprises a motor drive for travelling on the ground surface, and/or that the ground treatment apparatus (10; 170) comprises a coupling device (32) for coupling to a traction or pusher vehicle (34).

## Revendications

1. Dispositif de traitement de sols pour des sols (16) avec gazon (54), en particulier des sols (16) d'installations sportives ou de loisirs, en particulier avec un système de climatisation de gazon (156), dans lequel le dispositif de traitement de sols (10 ; 170) comprend un système de support (22), une pluralité d'éléments d'injection (56) retenus directement ou indirectement sur celui-ci, ainsi qu'un système de fourniture de fluide (35), qui est en liaison fluidique avec les éléments d'injection (56), dans lequel le dispositif de traitement de sols (10 ; 170) comprend au moins un système d'entraînement (90, 92), par l'intermédiaire duquel les éléments d'injection (56) peuvent, par rapport au système de support (22), d'une part être abaissés et soulevés ainsi que d'autre part sont mobiles le long d'une direction de traitement (20) du dispositif de traitement de sols (10 ; 170), dans lequel les éléments d'injection (56) peuvent être introduits dans le sol par abaissement, afin d'injecter du fluide dans le sol (16) sur une zone de traitement (158), dans lequel les éléments d'injection (56) restent fixes sur la zone de traitement (158) pendant l'insertion dans le sol (16), sous l'effet d'un mouvement relatif par rapport au système de support (22) déplacé dans la direction de traitement (20), dans lequel les éléments d'injection (56) peuvent être soulevés après l'injection de fluide et peuvent être déplacés par rapport au système de support (22) dans la direction de traitement (20), dans lequel les éléments d'injection (56), lors d'un nouvel abaissement dans le sol (16), peuvent être introduits sur une autre zone de traitement (158), qui est située en aval de la zone de traitement (158) citée en premier dans la direction de traitement (20), dans lequel le dispositif de traitement de sols (10 ; 170) comprend un système de retenue (88) avec une partie de retenue (94), sur laquelle les éléments d'injection (56) sont retenus, dans lequel le système de retenue (88) est accouplé au système de support (22) par l'intermédiaire de l'au moins un système d'entraînement (90, 92), de sorte que les éléments d'injection (56) peuvent être soulevés et abaissés conjointement ainsi que déplacés le long de la direction de traitement (20).

2. Dispositif de traitement de sols selon la revendication 1, **caractérisé en ce que** le dispositif de traitement de sols (10 ; 170) est réalisé de sorte que les zones de traitement (158) successives dans la direction de traitement (20) sont adjacentes les unes aux autres ou se chevauchent mutuellement, et/ou que les éléments d'injection (56) sont positionnés les uns par rapport aux autres de telle sorte que des zones d'efficacité (160), apparaissant respectivement sur la zone de traitement (158), des injections de fluide des buses (62 ; 84 ; 870 ; 875) individuelles, se chevauchent mutuellement ou sont adjacentes les unes aux autres.

3. Dispositif de traitement de sols selon la revendication 1 ou 2, **caractérisé en ce que** le au moins un système d'entraînement (90, 92) peut être commandé électriquement et que le dispositif de traitement de sols (10 ; 170) comprend un système de commande (72) pour commander le au moins un système d'entraînement, et/ou que le au moins un système d'entraînement (90, 92) est réalisé sous la forme d'un système d'entraînement (90, 92) mécanique, électrique, hydraulique, pneumatique et/ou magnétique.

4. Dispositif de traitement de sols selon l'une quelconque des revendications précédentes, **caractérisé en ce qu'**au moins un de ce qui suit s'applique :
- les éléments d'injection (56) peuvent être abaissés et soulevés de manière rectiligne avec le au moins un système d'entraînement (90, 92) et/ou peuvent être déplacés de manière rectiligne le long de la direction de traitement (20) par rapport au système de support (22) ;
- les éléments d'injection (56) peuvent être abaissés et soulevés verticalement ou sensiblement verticalement et/ou les éléments d'injection (56) sont mobiles horizontalement ou sensiblement horizontalement le long de la direction de traitement (20) ;
- les éléments d'injection (56) peuvent coulisser le long de la direction de traitement (20) et/ou pour être soulevés et abaissés par rapport au système de support (22).

5. Dispositif de traitement de sols selon l'une quelconque des revendications précédentes, **caractérisé en ce que** le dispositif de traitement de sols (10 ; 170) comprend un premier système d'entraînement (90) pour le soulèvement et l'abaissement des éléments d'injection (56), en particulier un système d'entraînement (90) hydraulique, ainsi qu'un deuxième système d'entraînement (92) pour le déplacement des éléments d'injection (56) le long de la direction de traitement (20), en particulier un système d'entraînement (92) pneumatique.

6. Dispositif de traitement de sols selon l'une quelconque des revendications précédentes, **caractérisé en ce qu'**au moins un de ce qui suit s'applique :
- des ouvertures de passage (96), par lesquelles les éléments d'injection (56) passent et sur les bords (98) desquelles les éléments d'injection (56) sont fixés de manière immobile ou guidés de manière mobile, sont formées dans la partie de retenue (94) ;
- la partie de retenue (94) est réalisée en forme de plaque au moins par endroits ;
- les éléments d'injection (56) sont réalisés de manière coulissante, en particulier indépendamment les uns des autres, par rapport à la partie de retenue (94), dans lequel un coulissement d'un élément d'injection (56) respectif par rapport à la partie de retenue (94) s'effectue de préférence à l'encontre de l'action d'un élément de rappel (108) respectif, lequel précontraint l'élément d'injection (56) en direction du sol (16), dans lequel le système de retenue (88) comprend ou forme une partie d'appui (112), sur laquelle l'élément d'injection (56) s'appuie en direction du sol (16) ;
- une conduite de fluide (68), par l'intermédiaire de laquelle les éléments d'injection (56) sont en liaison fluidique avec le système de fourniture de fluide (35), est retenue sur le système de retenue (88) ;
- le dispositif de traitement de sols (10 ; 170) comprend au moins un élément d'étanchéité (114), qui s'appuie sur le système de retenue (88) et, dans l'état abaissé de celui-ci, repose sur le sol (16), dans lequel l'élément d'étanchéité (116) ou un bord de l'élément d'étanchéité borde au moins un élément d'injection (56).

7. Dispositif de traitement de sols selon l'une quelconque des revendications précédentes, **caractérisé en ce que** les éléments d'injection (56), après l'introduction dans le sol (16) et avant l'exercice de l'injection de fluide, peuvent être soulevés au moyen de l'au moins un système d'entraînement (90, 92), afin de fournir un espace libre au-dessous des éléments d'injection (56) dans le sol (16).

8. Dispositif de traitement de sols selon l'une quelconque des revendications précédentes, **caractérisé en ce qu'**une injection de fluide peut être réalisée, qui comprend au moins un des paramètres suivants :
- un seul coup de bélier ou plusieurs coups de bélier successifs ;
- une pression de fluide d'approximativement 5 bar à 10 bar ;
- une durée d'un coup de bélier respectif approximativement de 0,1 s à 0,5 s ;
- une profondeur d'insertion des éléments d'injection (56) dans le sol d'environ 5 cm à 15 cm.

9. Dispositif de traitement de sols selon l'une quelconque des revendications précédentes, **caractérisé en ce que** les éléments d'injection (56) sont réalisés en forme de lance ou comprennent des lances (58), et/ou que les éléments d'injection (56) sont pourvus côté extrémité ou sur une partie d'extrémité d'une buse (62 ; 84 ; 870 ; 875) respective, de préférence que la buse (62 ; 870 ; 875) comprend au moins un canal de sortie (78) pour le fluide, qui est orienté de manière à former un angle (80) par rapport à un canal d'amenée axial (76) de l'élément d'injection (56).

10. Dispositif de traitement de sols selon l'une quelconque des revendications précédentes, **caractérisé en ce que** les éléments d'injection (56) sont espacés les uns des autres de manière uniforme et/ou que les éléments d'injection (56) sont disposés les uns par rapport aux autres selon un modèle régulier, en particulier un modèle hexagonal ou rectangulaire.

11. Dispositif de traitement de sols selon l'une quelconque des revendications précédentes, **caractérisé en ce que** les éléments d'injection (56) peuvent être remplacés dans leur intégralité ou en partie individuellement, de préférence manuellement et/ou sans outil.

12. Dispositif de traitement de sols selon l'une quelconque des revendications précédentes, **caractérisé en ce que** le fluide est ou comprend un gaz comprimé ou mélange de gaz comprimés, en particulier de l'air comprimé, ou que le fluide est ou comprend un liquide.

13. Dispositif de traitement de sols selon l'une quelconque des revendications précédentes, **caractérisé en ce que** le dispositif de fourniture de fluide (35) comprend un compresseur (36) destiné à fournir un fluide et un système d'accumulation (50) en liaison fluidique avec celui-ci pour le fluide, qui est en liaison fluidique avec les éléments d'injection (56), en particulier que le système de fourniture de fluide (35) comprend une conduite de fluide (68), à laquelle les éléments d'injection (56) sont raccordés parallèlement.

14. Dispositif de traitement de sols selon l'une quelconque des revendications précédentes, **caractérisé en ce qu'**au moins un élément d'appui (28) en particulier en forme de cylindre, destiné à reposer sur la surface de sol (16), qui est situé en amont ou en aval des éléments d'injection (56) dans la direction de traitement (20), est disposé sur le système de support (22).

15. Dispositif de traitement de sols selon l'une quelconque des revendications précédentes, **caractérisé en ce que** le dispositif de traitement de sols (10 ; 170) comprend un mécanisme d'entraînement pour le déplacement sur la surface de sol et/ou que le dispositif de traitement de sols (10 ; 170) comprend un système d'accouplement (32) pour l'accouplement à un véhicule tracteur ou pousseur (34).
